# EUROPEAN PATENT SPECIFICATION

(11) **EP 2 975 439 B1**
(45) Date of publication and mention of the grant of the patent: **14.06.2017**
(21) Application number: 14764833.1
(22) Date of filing: 07.03.2014
(51) Int. Cl.: C08J 7/04, G02B 1/10, G02B 5/02, G02B 1/14

(54) **LAMINATED FILM AND DISPLAY DEVICE**
LAMINIERTE FOLIE UND ANZEIGEVORRICHTUNG
FILM STRATIFIÉ ET DISPOSITIF D'AFFICHAGE

(30) Priority: 14.03.2013 JP 2013051206
(43) Date of publication of application: 20.01.2016
(73) Proprietor: FUJIFILM Corporation, Tokyo 106-8620 (JP)
(72) Inventor: FUNAKUBO Takeshi, Fujinomiya-shi Shizuoka 418-8666 (JP); HOSODA Hidemasa, Fujinomiya-shi Shizuoka 418-8666 (JP); NOMURA Tatsuya, Fujinomiya-shi Shizuoka 418-8666 (JP); MIYAKE Kazuhito, Fujinomiya-shi Shizuoka 418-8666 (JP)
(74) Representative: Hoffmann Eitle
(86) International application number: PCT/JP2014/055924
(87) International publication number: WO 2014/142015

(56) References cited:
- JP-A- H11 326 607
- JP-A- 2009 235 119
- JP-A- 2011 123 270
- JP-A- 2011 123 270
- JP-A- 2012 116 184
- US-A1- 2009 202 819
- US-A1- 2010 271 699

## Description

### Technical Field

The present invention relates to a laminated film and a display device. More specifically, the present invention relates to a laminated film having an optical functional layer that condenses or diffuses incident light and a hard coat layer and a display device having the laminated film.

### Background Art

An optical sheet such as a prism sheet, a lens sheet, or a diffusion sheet has been widely used as a constituent member of a backlight unit of a flat panel display. The optical sheet is produced by forming a plurality of prisms or lenses, which refract incident light in a predetermined direction, on a support and providing a diffusion layer which diffuses light by refracting the incident light in various manners, on a support. A layer formed of a plurality of prisms or lenses and a diffusion layer are collectively referred to as an optical functional layer. With the expansion of the market, the performance of the flat panel display has been improved.

However, when an optical sheet is produced, the optical sheet may be scratched in some cases. For example, when the surface of a support is coated with a material for forming an optical functional layer, the support tends to be scratched. In addition, when the produced optical sheet is transported, accumulated, or incorporated in a backlight unit, scratches are generated on the surface of the support of the optical sheet due to a contact of the optical sheet with, for example, another optical member.

Here, for the purpose of providing so-called scratch resistance which means scratches are unlikely to be generated, it is suggested that a hard coat layer is provided on a surface on the opposite side of the surface for which an optical functional layer of an optical sheet is provided (for example, see Patent Documents 1-3).

JP-A-2011-123270 discloses a multilayer film which includes a transparent support in which a coating film to be photo-cured with irradiation light is formed on one surface in order for an optical functional layer that condenses or diffuses light by refracting incident light to be formed on the one surface; and a transparent hard coat layer which is disposed on another surface of the support and formed of a polymer, and the transmittance of light having a wavelength of 340 nm is in the range of 70-100%. The hard coat layer in which the transmittance of light having a wavelength of 340 nm used in JP-A-2011-123270 is in the range of 70-100% is intended not to use a UV curing resin as a main component. Further, JP-A-2011-123270 describes that the film thickness of the hard coat layer is in the range of 500-10000 nm.

JP-A-2009-199001 discloses that it is possible to sufficiently obtain adhesiveness with respect to various prism layers and also obtain brightness improving characteristics using a laminated film for a prism sheet which includes a support that is formed of biaxially oriented polyester; an easily adhesive layer that is provided on one surface of the support and contains a compound having a plurality of carbodiimide structures; and a rear surface layer that is provided on another surface of the support and has an average reflectance of ≤ 3.5% with respect to light having a wavelength of 380-780 nm. JP-A-2009-199001 describes that the film thickness of a hard coat layer is controlled to be the film thickness having anti-reflection characteristics, but Examples in JP-A-2009-199001 disclose only examples in which a hard coat layer having a thermosetting resin as a main component is used.

JP-A-11-326607 describes that there is provided a lens film in which a lens layer formed of a concave lens and a convex lens is provided on a transparent substrate film and a hard coat layer is provided on the surface of the transparent substrate film on the opposite side of the lens layer. Further, scratch resistance is provided for the rear surface of the lens film, scratches which are already generated are repaired, a decrease in the commercial value of a final product because of scratches is prevented, and degradation of transparency which is an important property as a lens film is prevented by the lens film. JP-A-11-326607 describes that the thickness of the hard coat layer is preferably in the range of 3000-15000 nm and also describes an example in which a hard coat layer having a thickness of 6000 nm is formed using a UV curable resin.

Meanwhile, a sheet using a thin sol gel single film as blocking or an oligomer block has been known in the technical field other than an optical film having an optical functional layer. In this case, the sheet becomes a sheet whose surface does not have a prism surface.

For example, JP-A-2010-173296 discloses a sheet which includes a film having a thickness of ≤ 120 nm on the surface of a film substrate and in which the film is configured of a cured material of a curable composition and the curable composition contains a metal oxide sol and an organic metal compound and describes that a blocking phenomenon can be prevented without degrading optical characteristics, the sheet has excellent process suitability, and precipitation of an oligomer to the surface of a film can be prevented by the sheet.

### Summary of Invention

### Technical Problem

However, when a laminated film having an optical functional layer that condenses or diffuses incident light and a hard coat layer is produced according to the methods described in Patent Documents 1 and 3 , it is understood that the brightness is insufficient and adhesiveness between a support and the hard coat layer is insufficient.

Meanwhile, when a laminated film having an optical functional layer that condenses or diffuses incident light and a hard coat layer is produced according to the methods described in Examples of JP-A-2009-199001, it is understood that the brightness can be improved by controlling the film thickness thereof and the adhesiveness between a support and a hard coat layer can be improved although the reason is unclear. However, in the laminated film obtained according to the method described in Examples of JP-A-2009-199001, the hardness of the hard coat layer formed using a thermosetting resin is insufficient.

Further, in JP-A-2010-173296, there is no description that a sheet disclosed in JP-A-2010-173296 is applied to an optical film having an optical functional layer.

An object of the present invention is to provide a laminated film which has excellent brightness and in which a hard coat layer has high hardness and the adhesiveness between the hard coat layer and a support is excellent.

### Solution to Problem

The present invention which is specific solving means for solving the above-described problem is as follows.
[1] A laminated film including: a support; an optical functional layer which is provided on one surface (A surface) side of the support and condenses or diffuses incident light; and a hard coat layer which is provided on the outermost layer of a surface (B surface) side on the opposite side of the A surface of the support on which the optical functional layer is provided and has an inorganic component formed of a hydrolyzate of alkoxysilane or a UV curable resin as a main component, and the thickness of the hard coat layer is ≤ 150 nm.
[2] In the laminated film according to [1], it is preferable that the hard coat layer is laminated to be in contact with the support.
[3] It is preferable that the hard coat layer of the laminated film of [1] or [2] has a thickness of 50-150 nm.
[4] It is preferable that the laminated film according to any of [1] - [3] contains an alkoxysilane including one or more organic functional groups other than a hydroxyl group as the alkoxysilane.
[5] In the laminated film of any of [1] - [4], it is preferable that a ratio of the alkoxysilane having one or more of the organic functional groups other than the hydroxyl group to the entirety of the alkoxysilane contained in the hard coat layer is ≥ 30 mol-%.
[6] In the laminated film of any of [1] - [5], it is preferable that the hard coat layer is free from inorganic particles other than the hydrolyzate of the alkoxysilane.
[7] In the laminate film of any of [1] - [3], it is preferable that the UV curable resin is cured by irradiating a composition containing at least one of a monomer and an oligomer and a photopolymerization initiator with UV rays.
[8] The lamination film of [7], in which the monomer or the oligomer includes two or more polymerizable double bonds in a molecule.
[9] In the laminated film of any of [1] - [8], it is preferable that the main component of the optical functional layer is a resin having an elastic modulus of < 20 MPa.
[10] In the laminated film of any of [1] - [8], it is preferable that the main component of the optical functional layer is a resin having an elastic modulus of ≥ 20 MPa.
[11] A display device including the laminated film of any of [1] - [10].

### Advantageous Effects of Invention

According to the present invention, it is possible to provide a laminated film which has excellent brightness and in which a hard coat layer has high hardness and the adhesiveness between the hard coat layer and a support is excellent.

### Brief Description of Drawings

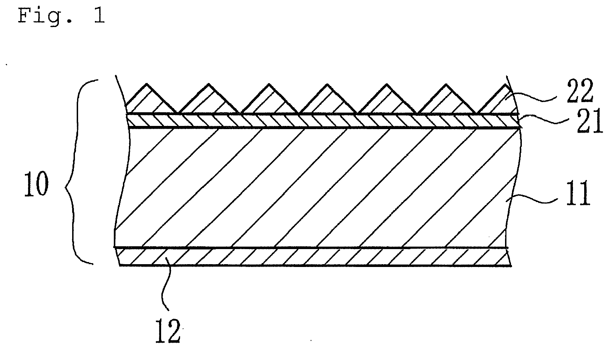

Fig. 1 is a view schematically illustrating a section of a laminated film of the present invention.

### Description of Embodiments

### [Laminated film]

A laminated film of the present invention includes a support; an optical functional layer which is provided on one surface (A surface) side of the support and condenses or diffuses incident light; and a hard coat layer which is provided on the outermost layer of a surface (B surface) side on the opposite side of the A surface of the support on which the optical functional layer is provided and has an inorganic component formed of a hydrolyzate of alkoxysilane or a UV curable resin as a main component, and the thickness of the hard coat layer is ≤ 150.

By configuring the laminated film in this manner, the laminated film of the present invention has excellent brightness, the hardness of the hard coat layer becomes high, and the adhesiveness between the hard coat layer and the support becomes excellent.

Hereinafter, preferable embodiments of the laminated film of the present invention will be described.

Fig. 1 illustrates an example of the laminated film of the present invention.

In Fig. 1, a laminated film (10) is provided with an optical functional layer (22) on one surface (A surface) of a support (11). A hard coat layer (12) which has an inorganic component formed of a hydrolyzate of alkoxysilane or a UV curable resin as a main component and whose thickness is ≤ 150 nm is provided on the outermost layer of a surface (B surface) side on the opposite side of the A surface of the support on which the optical functional layer is provided.

### <Support>

It is preferable that the support (11) is obtained by forming a polymer compound to have a film shape according to a melt film forming method or a solution film forming method. It is preferable that a transparent compound is used for the polymer compound used in the support (11).

Examples of the polymer compound used in the support (11) include polyethylene terephthalate (PET), polyethylene naphthalate (PEN), polybutylene terephthalate (PBT), polybutylene naphthalate (PBN), polyarylates, polyether sulfone, polycarbonate, polyether ketone, polysulfone, polyphenylene sulfide, a polyester-based liquid crystal polymer, triacetyl cellulose, a cellulose derivative, polypropylene, polyamides, polyimide, and polycycloolefins.

Among these, PET, PEN, triacetyl cellulose, and a cellulose derivative are more preferable and PET and PEN are particularly preferable.

Moreover, it is preferable that a so-called biaxially oriented polymer film which is obtained by extending a long film-like polymer compound in two directions which are respectively orthogonal to the longitudinal direction and the width direction is used for the support (11). Further, biaxially oriented film-like PET and PEN are particularly preferably used as the support (11) from viewpoints of elasticity and transparency.

Moreover, it is preferable that the support (11) is a support in which at least one of both surfaces (the A surface and the B surface) is subjected to a corona discharge treatment. The surface of the support (11) is hydrophilized by the corona discharge treatment and thus wet properties of various aqueous coating liquids described below can be improved and functional groups such as a carboxyl group and a hydroxy group can be introduced. In this manner, the adhesion force between the B surface of the support (11) and the hard coat layer (12) and the adhesion force between the A surface of the support (11) and the optical functional layer (22) or between the A surface of the support (11) and an easily adhesive layer (21) can be further improved.

It is preferable that the support has a thickness of 50-350 µm.

The refractive index varies depending on the material to be used, but it is preferable that the support has a refractive index of 1.40-1.80. When the refractive index is in the above-described range, a sheet showing excellent toughness as a base material and having excellent transparency can be obtained.

### <Hard coat layer>

The laminated film of the present invention includes a hard coat layer which is provided on the outermost layer of a surface (B surface) side on the opposite side of the A surface of the support on which the optical functional layer is provided and has an inorganic component formed of a hydrolyzate of alkoxysilane or a UV curable resin as a main component, and the thickness of the hard coat layer is ≤ 150 nm.

### (Lamination structure)

In the laminated film of the present invention, the hard coat layer is provided on the outermost layer on the surface (B surface) side on the opposite side of the A surface of the support on which the optical functional layer is provided. By configuring the laminated film in this manner, the hard coat layer (12) can protect the surface on the opposite side of the A surface of the support (11) on which the optical functional layer is provided as described above, improve the hardness as a laminated film, and complement scratch resistance, which is preferable.

In the laminated film of the present invention, the hard coat layer may be laminated in a state of being in contact with the support or the hard coat layer may be laminated through the support and an easily adhesive layer.

From a viewpoint of improving the brightness by allowing only the hard coat layer to exhibit an anti-reflection function without using an easily adhesive layer, it is preferable that the hard coat layer is laminated in the state of being in contact with the support. Further, from a viewpoint of the cost, it is preferable that only the hard coat layer exhibits the anti-reflection function without using an easily adhesive layer.

In the case where the hard coat layer is laminated through the support and an easily adhesive layer, an easily adhesive layer described below preferably used between the support and the optical functional layer can be used as the easily adhesive layer.

In the laminated film of the present invention, the hard coat layer may be formed of a single layer or a plurality of layers, but it is preferable that the hard coat layer is formed of a single layer. From a viewpoint of the cost, it is preferable that the hard coat layer formed of a single layer exhibits an anti-reflection function.

### (Characteristics)

In the laminated film of the present invention, a thickness T12 of the hard coat layer (12) is ≤ 150 nm from a viewpoint of obtaining excellent transparency and hardness. Not intended to adhere to any theory, by adjusting the film thickness to be within the above-described range, only the hard coat layer can exhibit the anti-reflection function, light-transmitting properties are improved by suppressing the light reflectance of the hard coat layer, and the brightness can be improved as the entirety of the laminated film. The description of the anti-reflection function or the mechanism thereof is described in JP-A-2011-123270 or JP-A-2009-199001.

From a viewpoint of maintaining transparency and further improving the hardness of the hard coat layer, the film thickness of the laminated film of the present invention is preferably 50-150 nm and more preferably 50-120 nm. It is preferable that the film thickness of the hard coat layer satisfies the above-described range. Further, the film thickness thereof is preferably in the range of (550/(4n)) ± 40 nm and more preferably (550/(4n)) ± 30 nm. When the film thickness of the hard coat layer is in the above-described range, coloration does not occur and sufficiently low reflection performance can be obtained. The ranges of 40-130 nm or 55-100 nm can be exemplified.

Moreover, when the thickness of the hard coat layer is in the above-described range, the adhesiveness between the support and the hard coat layer can be improved although the specific mechanism is unclear.

The thickness T12 of the hard coat layer (12) can be controlled by adjusting the coating amount of a coating liquid for a hard coat layer, described below, which forms the hard coat layer (12).

It is preferable that the hard coat layer (12) further has transparency.

In the hard coat layer (12), a refractive index n at a measurement wavelength of 550 nm is preferably of 1.20-1.61 and more preferably 1.28-1.55. When the refractive index n is in the above-described range, sufficiently low reflection performance can be obtained.

As a method of controlling the refractive index n of the hard coat layer (12), a method of changing the kind or the combination of the main component used for the hard coat layer and the kind or the amount of an additive can be exemplified.

### (Composition)

In the laminated film of the present invention, the main component of the hard coat layer is an inorganic component formed of a hydrolyzate of alkoxysilane or a UV curing resin. In the present specification, the main component of a layer means a component included in the layer by the content of ≥ 50 mass-%.

As the hard coat layer, two types of layers which are a first hard coat layer having an inorganic component formed of a hydrolyzate of the alkoxysilane described below as a main component and a second hard coat layer having a UV curing resin as a main component can be used in the present invention. When these hard coat layers are used, the hardness of the hard coat layer can be more improved than the hard coat layer having a thermosetting resin as a main component which is used in Examples of JP-A-2009-199001 and, preferably, the hard coat layer (12) having excellent scratch resistance can be formed.

### (1) First hard coat layer having inorganic component formed of a hydrolyzate of alkoxysilane as main component

Hereinafter, preferable modes of materials used for forming the first hard coat layer will be described.

### (1-1) Alkoxysilane

Examples of the alkoxysilane used as a material for forming the first hard coat layer include a tetraalkoxysilane and an alkoxysilane having one or more organic functional groups other than a hydroxyl group.

It is preferable to use a water-soluble or water-dispersible material as an alkoxysilane. It is particularly preferable to use a water-soluble or water-dispersible material from a viewpoint of reducing environmental pollution caused by volatile organic compounds (VOC).

As a method of hydrolyzing an alkoxysilane, which is not particularly limited, in order to prepare an inorganic component formed of a hydrolyzate of the alkoxysilane, a method of hydrolyzing a coating liquid for a first hard coat layer, in a solvent, which contains the alkoxysilane used for forming the first hard coat layer can be exemplified.

As the solvent used in the method of hydrolyzing the alkoxysilane, which is not particularly limited, water is preferable from a viewpoint of the environment and acidic water (acidic aqueous solution) described below is more preferable.

It is preferable that the coating liquid for a first hard coating layer contains an aqueous solution of a silanol generated by hydrolyzing an alkoxysilane in an acidic aqueous solution and a water-soluble curing agent used for dehydration condensation of the silanol and more preferable that the coating liquid for a first hard coating layer contains an aqueous solution of a silanol generated by hydrolyzing a tetraalkoxysilane and an alkoxysilane having one or more organic functional groups other than a hydroxyl group in an acidic aqueous solution and a water-soluble curing agent used for dehydration condensation of the silanol.

### (1-1-1) Alkoxysilane having one or more organic functional groups other than hydroxyl group

It is preferable that the alkoxysilane having one or more organic functional groups other than the hydroxyl group, which is not particularly limited, is the alkoxysilane of formula (1) .

(R¹)ₙ₊₁Si(OR²)₃₋ₙ (1)

(Here, R¹ is an organic group which does not include a hydroxyl group; R²'s each independently are methyl or ethyl; and n is an integer of 0-2.)

n in the formula (1) is an integer of 0-2, is preferably 0 or 1, and more preferably 0. The compound of formula (1) is a trifunctional alkoxysilane if n is 0 and is a bifunctional alkoxysilane if n is 1. Moreover, the trifunctional alkoxysilane and the bifunctional alkoxysilane may be used in combination.

Examples of preferable compounds from among alkoxysilanes having one or more organic functional groups other than the hydroxyl group include vinyl trimethoxysilane, 3-methacryloxy propyl trimethoxysilane, 3-acryloxy propyl trimethoxysilane, 3-chloropropyl trimethoxysilane, 3-ureidopropyl trimethoxysilane, propyl trimethoxysilane, phenyl trimethoxysilane, 3-glycidoxy propyl triethoxysilane, 2-(3,4-epoxycyclohexyl)ethyl triethoxysilane, vinyl triethoxysilane, 3-methacryloxy propyl triethoxysilane, 3-acryloxy propyl triethoxysilane, 3-chloropropyl triethoxysilane, 3-ureidopropyl triethoxysilane, propyl triethoxysilane, phenyl triethoxysilane, 3-glycidoxy propyl methyl dimethoxysilane, 2-(3,4-epoxycyclohexyl)ethyl methyl dimethoxysilane, vinyl methyl dimethoxysilane, 3-methacryloxy propyl methyl dimethoxysilane, 3-acryloxy propyl methyl dimethoxysilane, chloropropyl methyl dimethoxysilane, propyl methyl dimethoxysilane, phenyl methyl dimethoxysilane, 3-glycidoxy propyl methyl diethoxysilane, 2-(3,4-epoxycyclohexyl)ethyl methyl diethoxysilane, vinyl methyl diethoxysilane, 3-methacryloxy propyl methyl diethoxysilane, 3-acryloxy propyl methyl diethoxysilane, chloropropyl methyl diethoxysilane, propyl methyl diethoxysilane, phenyl methyl diethoxysilane, 3-trimethoxysilylpropyl-2-[2-(methoxyethoxy)ethoxy]ethylure thane, 3-triethoxysilylpropyl-2-[2-(methoxyethoxy)ethoxy]ethyluret hane, 3-tirmethoxysilylpropyl-2-[2-(methoxypropoxy)propoxy]propyl urethane, and 3-triethoxysilylpropyl-2-[2-(methoxypropoxy)propoxy]propylu rethane.

Among these, a trialkoxysilane which is the alkoxysilane represented by the following formula (1) and in which n represents 0 is more preferable and more preferable examples thereof include 3-glycidoxy propyl trimethoxysilane, 3-glycidoxy propyl triethoxysilane, 3-chloropropyl trimethoxysilane, 2-(3,4-epoxycyclohexyl)ethyl trimethoxysilane, 3-ureido propyl triethoxysilane, 3-trimethoxysilylpropyl-2-[2-(methoxyethoxy)ethoxy]ethylure thane, and 3-trimethoxysilylpropyl-2-[2-(methoxypropoxy)propoxy]propyl urethane. In addition, 3-glycidoxy propyl triethoxysilane is particularly preferable.

As a commercially available product, KBE-403 (manufactured by Shin-Etsu Chemical Co. , Ltd.) is exemplified.

The alkoxysilane having one or more organic functional groups other than the hydroxyl group does not contain a hydroxyl group as a functional group. That is, the alkoxysilane of formula (1) includes an organic group R¹ free from a hydroxyl group. This is because the obtained film becomes vulnerable in a case where R¹ includes a hydroxyl group.

In formula (1), the molecular chain length or the number of carbons of R¹ is not particularly limited, but it is preferable that R¹ is an organic group which has 1-15 carbon atoms and has a molecular chain length. However, in order to obtain the hard coat layer (12) with further improved brittleness and to improve the adhesiveness between the hard coat layer (12) and the support (11), the number of carbon atoms of R¹ is more preferably 3-15 and still more preferably 5-13. In addition, when the number of carbon atoms of R¹ is adjusted to be ≤ 15, the flexibility of the hard coat layer (12) does not become excessively large and the hardness thereof becomes sufficient compared to a case where the number of carbon atoms is ≥ 16.

Moreover, it is preferable that R¹ in formula (1) includes heteroatoms such as oxygen, nitrogen, and sulfur. When the organic group includes heteroatoms, the adhesion force between the organic group and the support (11) or the first easily adhesive layer (21) can be further improved. Particularly, it is preferable that R¹ includes, for example, an epoxy group, an amide group, a urethane group, a urea group, an ester group, and a carboxyl group. Among these, an organic silicon compound containing an epoxy group has an effect of improving stability of a silanol in acidic water, which is particularly preferable.

### (1-1-2) Tetraalkoxysilane

When a tetraalkoxysilane is used as a component of a raw material used for forming a first hard coat layer, the crosslinking density due to dehydration condensation of a silanol which is generated by hydrolyzing the tetraalkoxysilane and the alkoxysilane having one or more organic functional groups other than the hydroxyl group can be improved. In this manner, a hard coat layer (12) which is harder than a hard coat layer in the related art can be obtained.

The tetraalkoxysilane is not particularly limited, but it is more preferable that the tetraalkoxysilane has 1-4 carbon atoms, particularly preferable that the tetraalkoxysilane is tetramethoxysilane or tetraethoxysilane, and still particularly preferable that the tetraalkoxysilane is tetraethoxysilane. When the number of carbon atoms is ≤ 4, the hydrolysis rate of the tetraalkoxysilane at the time of being mixed with acidic water does not become extremely slow and the time required for dissolution until the solution turns into a uniform aqueous solution becomes shorter compared to the case where the number of carbon atoms is ≥ 5. In this manner, the production efficiency can be improved.

As a commercially available product of the tetraalkoxysilane, KBE-04 (manufactured by Shin-Etsu Chemical Co., Ltd.) can be exemplified.

It is preferable that the laminated film of the present invention includes 30% by mole or greater of an alkoxysilane having one or more organic functional groups other than the hydroxyl group from among the entirety of the alkoxysilanes contained in the hard coat layer. That is, the substance amount of the alkoxysilane having one or more organic functional groups other than the hydroxyl group is set to X1 and the substance amount of tetraalkoxysilane is set to X2 in the hard coat layer, the molar ratio of the tetraalkoxysilane acquired by the formula "X1/ (X1 + X2)} × 100" is preferably ≥ 30 mol-%, more preferably in the range of 30-95 mol-%, and particularly preferably in the range of 30-90 mol-%. When the molar ratio is in the above-described range, since the crosslinking density can be improved, the hard coat layer (12) with sufficiently high hardness and further improved brittleness can be obtained. In a case where the molar ratio thereof is ≥ 30 mol-%, the crosslinking density does not become excessively low and thus the hard coat layer (12) becomes sufficiently hard compared to the case where the molar ratio is < 30 mol-%. In addition, in the case where the molar ratio thereof is ≤ 95 mol-%, the crosslinking density does not become excessively high compared to the case where the molar ratio exceeds 95 mol%. Accordingly, the hard coat layer (12) which has excellent flexibility and is not brittle can be reliably obtained. For example, the molar ratio thereof can be set to be in the range of 30-50 mol-% or 30-46.3 mol-%.

### (1-2) Acidic water

As the material for forming the first hard coat layer, acidic water is preferably used. The hydrogen ion exponent (pH) of the acidic water is preferably in the range of 2-6 and particularly 2.5-5.5. This is because, when an aqueous solution is obtained by mixing a tetraalkoxysilane and an alkoxysilane having one or more organic functional groups other than a hydroxyl group with the acidic water, the alkoxysilane is hydrolyzed to generate a silanol, condensation of a silanol is promoted in the aqueous solution, that is, the alkoxysilane aqueous solution, and then an increase in the viscosity of the aqueous solution is likely to occur in a case where the pH thereof is < 2 or > 6. Further, the above-described pH value is the value at a temperature of 25° which is considered as so-called "room temperature".

The acidic water can be obtained by dissolving organic acids or inorganic acids in water. Examples of the acid, which is not particularly limited, include organic acids such as acetic acid, propionic acid, formic acid, fumaric acid, maleic acid, oxalic acid, malonic acid, succinic acid, citric acid, malic acid, and ascorbic acid and inorganic acids such as hydrochloric acid, nitric acid, sulfuric acid, phosphoric acid, and boric acid. Among these, acetic acid is preferable in terms of handleability.

It is preferable that the alkoxysilane aqueous solution is adjusted such that the amount of acidic water is of 60-2000 parts by mass (pbm) in a case where the total amount of the tetraalkoxysilane and the alkoxysilane having one or more organic functional groups other than a hydroxyl group, that is, the amount of the alkoxysilane being used is set to 100 pbm. When the alkoxysilane aqueous solution has the above-described composition, a hydrolysis aqueous solution of alkoxysilane which has excellent hydrolyzability and stability of the generated silanol can be obtained. In addition, the hydrolysis aqueous solution of such an alkoxysilane, that is, a coating liquid for a first hard coat layer which can be obtained using a silanol aqueous solution has excellent stability although the coating liquid is aqueous, the storage time taken until the laminated film starts to be produced is not restricted, and the production conditions of the laminated film do not need to be changed due to a change in properties of the coating liquid for a hard coat layer because the laminated film is continuously produced. The amount of the acidic water is more preferably in 100-1500 pbm and particularly preferably 150-1200 pbm with respect to 100 pbm of the total amount of the tetraalkoxysilane and the alkoxysilane having one or more organic functional groups other than a hydroxyl group. The aqueous solution tends to be gelled due to the dehydration and condensation of a silanol generated by hydrolyzing the alkoxysilane when the amount of the acidic water is < 60 pbm with respect to 100 pbm of the alkoxysilane, but the gelation of the aqueous solution can be reliably suppressed by adjusting the amount of the acidic water to be ≥60 pbm. Meanwhile, when the amount of the acidic water is ≥ 2000 pbm, the coating amount for forming the hard coat layer (12) to be sufficiently thick does not become excessively large because the concentration of an alkoxysilane in the coating liquid is high when compared to the case where the amount of the acidic water exceeds 2000 pbm. Therefore, it is possible to reliably prevent generation of thickness unevenness of a coating film for a hard coat layer and prolongation of a drying time for the coating film.

Further, a silane compound which is different from both of the tetraalkoxysilane and the alkoxysilane having one or more organic functional groups other than a hydroxyl group may be used for the coating liquid for a hard coat layer. In this case, it is preferable that the tetraalkoxysilane, the alkoxysilane, and other silane compounds are mixed such that the amount of the acidic water is 60-2000 pbm with respect to 100 pbm which is the total amount of the tetraalkoxysilane, the alkoxysilane having one or more organic functional groups other than a hydroxyl group, and other silane compound.

### (1-3) Curing agent

It is preferable to use a curing agent as a material for forming the first hard coat layer. It is preferable that the curing agent serving as a component used when the first hard coat layer is formed from the coating liquid for a first hard coat layer is water-soluble. The curing agent accelerates the dehydration condensation of a silanol and promotes formation of a siloxane bond. Examples of the water-soluble curing agent include water-soluble inorganic acids, organic acids, organic acid salts, inorganic acid salts, a metal alkoxide, and a metal complex.

Preferable examples of the inorganic acids serving as the water-soluble curing agent include boric acid, phosphoric acid, hydrochloric acid, nitric acid, and sulfuric acid.

Preferable examples of the organic acids serving as the water-soluble curing agent include acetic acid, formic acid, oxalic acid, citric acid, malic acid, and ascorbic acid.

Preferable examples of the organic acid salts serving as the water-soluble curing agent include aluminum acetate, aluminum oxalate, zinc acetate, zinc oxalate, magnesium acetate, magnesium oxalate, zirconium acetate, and zirconium oxalate.

Preferable examples of the inorganic acid salts serving as the water-soluble curing agent include aluminum chloride, aluminum sulfate, aluminum nitrate, zinc chloride, zinc sulfate, zinc nitrate, magnesium chloride, magnesium sulfate, magnesium nitrate, zirconium chloride, zirconium sulfate, and zirconium nitrate.

Preferable examples of a metal alkoxide serving as the water-soluble curing agent include an aluminum alkoxide, a titanium alkoxide, and a zirconium alkoxide.

Preferable examples of the metal complex serving as the water-soluble curing agent include aluminum trisacetylacetonate, aluminum acetylacetonate, aluminum ethylacetoacetate, titanium acetylacetonate, and titanium ethylacetoacetate. As the aluminum trisacetylacetonate, a commercially available product may be used and aluminum chelate A(W) (manufactured by Kawaken Fine Chemicals Co. , Ltd.) can be exemplified.

Among the above-described curing agents, a compound containing boron such as boric acid, phosphoric acid, an aluminum alkoxide, aluminum trisacetylacetonate or aluminum acetylacetonate; a compound containing phosphorus; and a compound containing aluminum are particularly preferable from a viewpoint of water solubility and stability in water, and at least one kind from among these may be used as a curing agent.

Examples of the commercially available products of the curing agent include aluminum chelate A(W) (manufactured by Kawaken Fine Chemicals Co., Ltd.).

It is preferable that the curing agent is uniformly mixed and dissolved in a coating liquid and also preferable that the curing agent is dissolved in water as a solvent of the coating liquid for the first hard coat layer of the present invention in terms of securing transparency of the hard coat layer (12). Since the curing agent is present in a form of a solid in the coating liquid in a case where the curing agent has low solubility in water, the curing agent remains as a foreign substance after coating and drying and transparency of the hard coat layer (12) becomes low in some cases.

The amount of the curing agent is preferably of 0.1-20 pbm, more preferably 0.5-10 pbm, and particularly preferably 1-8 pbm with respect to 100 pbm of the entirety of the alkoxysilanes contained in the hard coat layer that contains a tetraalkoxysilane and an alkoxysilane having one or more organic functional groups other than the hydroxyl group.

### (1-4) Surfactant

As the material for forming the first hard coat layer, a surfactant is preferably used. When a surfactant is used, the surface tension of the coating liquid for a hard coat layer is decreased, coating unevenness of the coating liquid for a hard coat layer with respect to the support (11) is suppressed, and thus the hard coat layer (12) with a uniform thickness can be formed.

Examples of the surfactant include known anionic, non-ionic, cationic, fluorine-based, and silicone-based surfactants. The surfactant is described in, for example, "Handbook of Surfactants" (edited by Ichiro Nishi, Ichiro Imai, and Masatake Kasai, Sangyo-Tosho Publishing Co., Ltd., published in 1960). Among these, an anionic surfactant and/or a cationic surfactant is preferably used.

Examples of the anionic surfactant include higher fatty acid salts such as potassium stearate and potassium behenate; alkyl ether carboxylates such as sodium POE lauryl ether carboxylate; N-acyl-L-glutamates such as N-stearoyl-Lglutamic acid monosodium salt; higher alkyl sulfate ester salts such as sodium lauryl sulfate and potassium lauryl sulfate; alkyl ether sulfate ester salts such as POE lauryl sulfate triethanolamine and sodium POE lauryl sulfate; N-acyl sarcosinates such as sodium lauryl sarcosine; higher fatty acid amide sulfonates such as sodium N-myristoyl-N-methyl taurine; alkyl phosphates such as sodium allyl phosphate; alkyl ether phosphates such as sodium POE oleyl ether phosphate or sodium POE stearyl ether phosphate; sulfosuccinates such as sodium di-2-ethylhexyl sulfosuccinate, sodium monolauroyl monoethanolamide polyoxyethylene sulfosuccinate, or sodium lauyl polypropylene glycol sulfosuccinate; alkyl benzene sulfonates such as sodium linear dodecyl benzene sulfonate, linear dodecyl benzene, sulfonic acid triethanolamine, linear dodecyl benzene sulfonate, or dodecyl diphenyl ether disulfonate; higher fatty acid ester sulfate ester salts such as cured coconut oil fatty acid sodium glycerin sulfate.

Examples of the commercially available anionic surfactant include RAPISOL A-90, RAPISOL A-80, RAPISOL BW-30, RAPISOL B-90, RAPISOL C-70 (trade name, manufactured by NOR CORPORATION) ; NIKKOL OTP-100 (trade name, manufactured by NIKKO CHEMICAL CO. , LTD.); Kohakuru ON, Kohakuru L-40, Phosphanol 702 (manufactured by Toho Chemical Industry Co., Ltd.); Beaulight A-5000, Beaulight SSS, and Sandeddo BL (manufactured by Sanyo Chemical Industries, Ltd.).

Examples of the cationic surfactant include alkyl trimethyl ammonium salts such as stearyl trimethyl ammonium chloride and lauryl trimethyl ammonium chloride; dialkyl dimethyl ammonium salts such as distearyl dimethyl ammonium chloride; alkyl pyridinium salts such as poly(N,N-dimethyl-3,5-methylene piperidinium) chloride and cetyl pyridinium chloride; alkyl quaternary ammonium salts, alkyl dimethyl benzyl ammonium salts, alkyl isoquinolinium salts, dialkyl Mori bromide salts, POE alkylamines, alkylamine salts, polyamine fatty acid derivatives, amyl alcohol fatty acid derivatives, benzalkonium chlorides, and benzethonium chloride. It is possible to suppress aggregation of particles during a process of drying a coating film and to form uniform unevenness on the surface using the above-described surfactant.

Examples of other commercially available products of the cationic surfactant include a phthalocyanine derivative (trade name, EFKA-745, manufactured by MORISHITA & CO., LTD.), organosiloxane polymer KP341 (manufactured by Shin-Etsu Chemical Co., Ltd.), (meth)acrylic acid (co)polymer polyflow No. 75, No. 90, No. 95 (manufactured by KYOEISHA CHEMICAL Co. , LTD.), and W001 (manufactured by Yusho Co., Ltd.).

Preferable examples of the nonionic surfactant include a polyoxyalkylene alkyl ether, a polyoxyethylene derivative, polyoxyethylene polyoxypropylene glycol, a polyoxyethylene fatty acid ester, a polyoxyethylene glyceryl ether fatty acid ester, a sorbitan fatty acid ester, a polyoxyethylene sorbitan fatty acid ester, a polyoxyethylene sorbitol fatty acid ester, polyoxyethylene hardened castor oil, and a sucrose fatty acid ester.

Examples of the commercially available products of the non-ionic surfactant include Naroacty CL-95, HN-100 (trade name, manufactured by Sanyo Chemical Industries Co. , Ltd.), LITHO REX BW400 (manufactured by KOKYU ALCOHOL KOGYO CO., LTD.), EMALEX ET-2020 (Nihon Emulsion Co. , Ltd.), Unilube 50MB-26, and Nonion IS-4 (manufactured by NOF CORPORATION).

Examples of the fluorine-based surfactant include Megafac F171, Megafac F172, Megafac F173, Megafac F176, Megafac F177, Megafac F 141, Megafac F142, Megafac F143, Megafac F144, Megafac R30, Megafac F437, Megafac F475, Megafac F479, Megafac F482, Megafac F554, Megafac F780, Megafac F780F, Megafac F781 (all manufactured by DIC Corporation), Fluorad FC430, Fluorad FC431, Fluorad FC171 (all manufactured by Sumitomo 3M Limited), Surflon S-382, Surflon SC-101, Surflon SC-103, Surflon SC-104, Surflon SC-105, Surflon SC1068, Surflon SC-381, Surflon SC-383, Surflon S393, Surflon KH-40 (all manufactured by ASAHI GLASS CO., LTD.), PF636, PF656, PF6320, PF6520, and PF7002 (manufactured by OMNOVA Solutions Inc.).

### (1-5) Colloidal silica

In the laminated film of the present invention, the hard coat layer may or may not contain inorganic particles other than a hydrolyzate of alkoxysilane. As the inorganic particles other than the hydrolyzate of the alkoxysilane, colloidal silica can be exemplified. Further, colloidal silica described in JP-A-2011-123270 can be used. For example, commercially available products such as Snowtex XL (manufactured by NISSAN CHEMICAL INDUSTRIES, LTD.) and a water dispersion of Aerosil OX-50 (manufactured by Nippon Aerosil Co. , Ltd.) can be respectively used as colloidal silica and a silica fine particle dispersion liquid.

In the laminated film of the present invention, the content of the inorganic particles other than a hydrolyzate of alkoxysilane in the hard coat layer is preferably 0-200 mass-% and more preferably 0-150 mass-% with respect to the mass of the hard coat layer. In addition, it is particularly preferable that the hard coat layer does not contain inorganic particles other than a hydrolyzate of alkoxysilane from a viewpoint of transparency.

### (2) Second hard coat layer having UV curing resin as main component

Hereinafter, preferable modes of the material for forming the second hard coat layer will be described.

### (2-1) UV curable monomer and oligomer

As the material of a UV curing resin used as the material for forming the second hard coat layer, a monomer or an oligomer can be exemplified.

It is preferable that the second hard coat layer having a UV curing resin as a main component is formed using a coating liquid for a second hard coat layer. Although not particularly limited, a known organic solvent or water can be used as the solvent of the coating liquid for a second hard coat layer and a ketone-based solvent such as MEK is preferably used from viewpoints of the solubility and the environment.

The component of the coating liquid for a second hard coat layer is not particularly limited as long as the component is a monomer or an oligomer to be cured by UV rays.

The coating liquid for a second hard coat layer is a coating liquid containing at least one of a monomer or an oligomer in water. In the laminated film of the present invention, it is preferable that the monomer or the oligomer is a monomer or an oligomer including a plurality of polymerizable double bonds in a molecule.

Further, if necessary, the coating liquid for a second hard coat layer may be formed by adding, for example, a polymerization initiator, a curing agent, and an additive.

It is preferable that the coating liquid for a second hard coat layer is a UV curable coating liquid containing a photopolymerization initiator and a UV curable compound (a monomer or an oligomer) among the above-described substances. That is, it is preferable that the hard coat layer (12) is formed by being coated with a UV curable coating liquid and curing the coating liquid for a hard coat layer with UV irradiation.

In addition, as the UV curable compound which is preferable to combine with a photopolymerization initiator, a monomer or an oligomer which includes an acrylic group or a methacrylic group having a radically polymerizable double bond can be used. Preferable examples of the monomer include a multifunctional monomer including a plurality of acrylic groups or methacrylic groups such as dipentaerythritol hexa(meth)acrylate, trimethylol propane tri(meth)acrylate, trimethylol propane polyethoxy tri (meth) acrylate, trimethylol propane polypropoxy tri(meth)acrylate, pentaerythritol tetra (meth) acrylate, and ditrimethylol propane tetraacrylate. Further, an oligomer such as urethane acrylate, epoxy acrylate, polyester acrylate, or polyether acrylate which includes an acrylic group or a methacrylic group is preferable. Moreover, styrene, divinyl benzene, allyl benzene, dially benzene, triallyl isocyanurate, diallyl phthalate, or diethylene glycol bis(allyl carbonate) is also preferable. Examples of the commercially available product of the multifunctional acrylic monomer include Aronix M-405 and M-350 (manufactured by TOAGOSEI CO., LTD.). These monomers and oligomers are preferably used in combination of plural kinds thereof in order for the hard coat layer (12) to have predetermined physical properties.

### (2-2) Photopolymerization initiator

As the photopolymerization initiator, a photopolymerization initiator generally used for polymerization of a monomer and an oligomer which have a radically polymerizable double bond can be used.

Specific examples of the photopolymerization initiator include acetophenone, benzophenone, benzoin methyl ether, benzoin ethyl ether, benzoin butyl ether, chloroacetophenone, acylphosphine oxide, 2-ethyl anthraquinone, benzyl methyl ketal, acyl phosphine oxide, a halogenated hydrocarbon having a triazine skeleton, a halogenated hydrocarbon compound having an oxadiazole skeleton, a phenyl acrydine derivative, a ketone compound, a ketoxime compound, an organic peroxide, a thio compound, a hexaaryl biimidazole, aromatic onium salts, ketoxime ether, and a titanocene-based compound.

A commercially available polymerization initiator such as IRGACURE 184 (manufactured by BASF Japan Ltd.) may be added.

The amount of the photopolymerization initiator to be added is generally preferably 0.1-10 mass-% with respect to the coating liquid for a hard coat layer.

### (2-3) Surfactant

When a surfactant is used, the surface tension of the coating liquid for a hard coat layer is decreased, coating unevenness of the coating liquid for a hard coat layer with respect to the support (11) is suppressed, and thus the hard coat layer (12) with a uniform thickness can be formed.

The surfactant is not particularly limited. Any surfactant from among an anionic surfactant, a cationic surfactant, a nonionic surfactant, a fluorine-based surfactant, and a betaine-based surfactant can be used. Among these, a surfactant whose HLB (Hydrophile-Lipophile Balance) value is in the range of 7-18 is preferable and a surfactant whose HLB value is in the range of 9-16 is particularly preferable. The HLB value is a value indicating the extent of affinity of a surfactant to water or oil. A preferable value of the HLB value is a value calculated by the Atlas HLB system.

Examples or preferable ranges of the anionic surfactant, the cationic surfactant, and the nonionic surfactant are the same as the examples or the preferable ranges of respective surfactants used in the first hard coat layer.

As the fluorine-based surfactant, a surfactant containing a perfluoroalkyl group which is configured of CF₃(CF₂)ₙ- in a molecule is used. When such a surfactant is added, the surface tension can be further decreased, the hydrophilicity of a coating film is improved, and thus contamination resistance of the coating film is improved.

Examples of such a fluorine-based surfactant include anionic fluorine-based surfactants such as a perfluoroalkyl carboxylate, a perfluoroalkyl sulfonate, a perfluoroalkyl phosphoric acid ester, a perfluoroalkenyl sulfonate, and a perfluoroalkenyl carboxylate; amphoteric fluorine-based surfactants such as a perfluoroalkyl betaine; cationic fluorine-based surfactants such as a perfluoroalkyl trimethyl ammonium; nonionic fluorine-based surfactant such as a perfluoroalkyl ethylene oxide adduct, a perfluoroalkyl amine oxide and an oligomer containing a perfluoroalkyl group.

Examples of the commercially available fluorine-based surfactant include Megafac F171, Megafac F172, Megafac F173, Megafac F176, Megafac F177, Megafac F141, Megafac F142, Megafac F143, Megafac F144, Megafac R30, Megafac F437, Megafac F475, Megafac F479, Megafac F482, Megafac F554, Megafac F780, Megafac F781 (all manufactured by DIC Corporation), Fluorad FC430, Fluorad FC431, Fluorad FC171 (all manufactured by Sumitomo 3M Limited), Surflon S-382, Surflon SC-101, Surflon SC-103, Surflon SC-104, Surflon SC-105, Surflon SC1068, Surflon SC-381, Surflon SC-383, Surflon S393, Surflon KH-40 (all manufactured by ASAHI GLASS CO., LTD.), PF636, PF656, PF6320, PF6520, and PF7002 (manufactured by OMNOVA Solutions Inc.).

Preferable examples of the betaine-based surfactant include a 2-alkyl-N-carboxymethyl-N-hydroxyethylimidazoliumbetaine, and lauryl dimethyl amino acetic acid betaine.

### (2-4) Other additives

In order to control surface characteristics, particularly, a friction coefficient of the laminated film, the second hard coat layer may contain a matting agent or a wax.

Examples of the matting agent include organic and inorganic substances such as silica, calcium carbonate, magnesium carbonate, barium sulfate, polystyrene, a polystyrene-divinyl benzene copolymer, polymethyl methacrylate, crosslinked polymethyl methacrylate, melamine, and benzoguanamine.

Examples of the wax include a paraffin wax, a microcrystalline wax, a polyethylene wax, a polyester-based wax, a carnauba wax, a fatty acid, a fatty acid amide, and a metal soap. Examples of the commercially available product include CELLOSOL 524 (manufactured by CHUKYO YUSHI CO., LTD.).

### <Optical functional layer>

The laminated film of the present invention is provided on one surface (A surface) of the support and includes an optical functional layer that condenses or diffuses incident light.

### (Lamination structure)

The optical functional layer (22) illustrated in Fig. 1 condenses or diffuses light by refracting incident light. As such an optical functional layer (22), a lens layer, a prism layer, or a diffusion layer is exemplified. Fig. 1 illustrates a case in which the optical functional layer (22) is used as a prism layer.

The optical functional layer (22) which is a prism layer is obtained by forming a plurality of prisms whose sections are triangular to have constant pitches. The laminated film (10) having such an optical functional layer (22) refracts incident light beams to a predetermined direction using the prisms when light is incident from the hard coat (12) side. In this manner, light is emitted and distributed so as to have a large peak in a predetermined direction. For example, when the incident light beams are refractive to the normal direction, the light is distributed so as to have a large peak in the normal direction. In this manner, when the laminated film (10) is used for a backlight unit of a liquid crystal display, the front brightness of the liquid crystal display is improved.

The optical functional layer (22) condenses or diffuses incident light by refracting light as described above. In this manner, the path of the light is controlled. Since the light is refracted on the surface of the optical functional layer (22) due to the incident angle and a difference in the refractive index between the support (11) and the optical functional layer (22) or the incident light is refracted or reflected on a light emitting surface, these optical characteristics are further expressed and then used depending on the configuration of the optical functional layer (22).

Therefore, when the laminated film (10) is used in the backlight unit of the liquid crystal display, the optical functional layer (22) controls the concentration of incident light, emits and distributes light so as to have a large peak in a predetermined direction, and obtains the prism function and the lens function of adjusting the front brightness of the liquid crystal display when light from a light source is incident from the hard coat layer (12) side. The laminated film (10) with such functions can be used as a so-called prism sheet or lens sheet. In addition, the optical functional layer (22) has a diffusion function of diffusing incident light to be uniformly distributed when light from a light source is incident from the hard coat layer (12) side. The laminated film (10) having such a function can be used as a so-called diffusion sheet.

In a case where the optical functional layer (22) is a lens layer, a plurality of lenses refracting light are arranged at a predetermined pitch. When light emitted from the surface of the support (11) is incident on the optical functional layer (22), the optical functional layer (22) controls the emitting angle of the incident light. Examples of the lens include cylindrical lenses obtained by dividing a cylindrical shape into two in an axial direction, a triangular prism, a spherical lens, and an aspherical lens. Among these, a triangular prism may be used as the lens. Accordingly, the optical functional layer (22) which is a prism layer as illustrated in Fig. 1 is considered as one of lens layer.

### (Composition)

It is preferable that the optical functional layer (22) further contains a polymerization initiator using a substance having a monomer, an oligomer, and a polymer generally having a radically polymerizable double bond as a main component.

### (i) Monomer and oligomer

Examples of the monomer and the oligomer having a radically polymerizable double bond include an acrylic monomer and an acrylic oligomer.

It is preferable that a resin which can be used as a main component of the optical functional layer is a resin obtained by curing a UV curable compound (a monomer or an oligomer).

As a material of the resin which can be used as a main component of the optical functional layer, for example, a monofunctional or multifunctional monomer, oligomer, or prepolymer having a (meth)acryloyl group and a (meth)acryloyloxy group for forming a known optical sheet can be used.

Examples of the monofunctional monomer include a vinyl monomer, a (meth)acrylic acid ester monomer, and a (meth)acrylamide derivative which are described in JP-A-2009-37204.

Examples of the multifunctional monomer include ethylene glycol di(meth)acrylate, bisphenol A polyethoxydiol di (meth) acrylate, and pentaerythritol tri (meth) acrylate which are described in JP-A-2009-37204.

Examples of the reactive prepolymer include epoxy (meth)acrylate, urethane (meth)acrylate, and polyester (meth)acrylate which are described in JP-A-2009-37204.

### (i-1) Monomer and oligomer capable of forming resin with low elasticity

A resin which can be used as a main component of the optical functional layer can adjust the elasticity measured by elasticity measurement to be < 20 MPa. The elasticity of a resin used as the main component of the optical functional layer is more preferably 5-19 MPa and more preferably 8-19 MPa and, for example, an elasticity of 18 MPa is included in the range thereof. In this manner, the restorability of the prism can be achieved and the scratch resistance thereof can be improved. Further, a resin with low elasticity has a high refractive index and can produce a laminated film with higher brightness, which is preferable.

In regard to the detailed description of other binders or additives which can be used in combination with a low elastic resin whose elasticity is < 20 MPa, the contents in the paragraphs [0027] - [0060] of JP-A-2012-208376 can be applied to the present invention. Among these, it is preferable to use a (meth)acrylic resin having one (meth)acryloyl group as a (i-1-A) active energy ray curable group described below and a (meth)acrylic resin having two (meth)acryloyl groups as a (i-1-B) active energy ray curable group described below.

### (i-1-A) (Meth)acrylic resin having one (meth)acryloyl group as (i-1-A) active energy ray curable group

A (i-1-A) component is a (meth)acrylic resin having one (meth)acryloyl group as an active energy ray curable group and may be a chain aliphatic, cyclic alicyclic, or aromatic (meth)acrylic resin containing heteroatoms such as halogen, sulfur, oxygen, or nitrogen. For example, a monofunctional (meth) acrylic resin described in JP-A-2009-37204 can be used.

Preferable examples of the (i-1-A) component include phenoxyethyl (meth)acrylate (also referred to as (meth)acrylic acid-2-phenoxyethyl) and a compound of the formula (A).

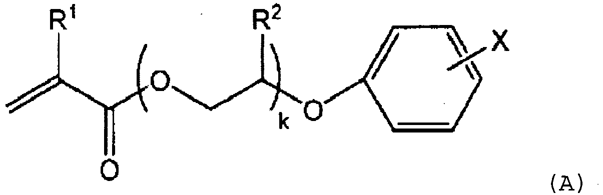

In formula (A), R¹ and R² each independently are H or methyl; X is H, chain aliphatic C₁₋₁₀-hydrocarbon, alicyclic C₁₋₁₀-hydrocarbon, or aromatic C₁₋₁₀-hydrocarbon; and k is an integer of 2-6.

When the compound of formula (A) is contained in a composition, which is used to form the optical functional layer, together with the phenoxyethyl (meth) acrylate, the flexibility is provided for an optical functional layer which is a cured material of the composition. Further, even when external force is applied to the optical functional layer and thus the shape thereof is changed, the restorability for restoring the optical functional layer to the original shape can be provided.

In the formula (A), it is preferable that X is H, chain aliphatic C₁₋₁₀-hydrocarbon, alicyclic C₁₋₁₀-hydrocarbon, or aromatic C₁₋₁₀-hydrocarbon. Among these, it is preferable that X is H.

In formula (A), k is a positive integer of 2-6. From a viewpoint of improving the flexibility of the optical functional layer, k is preferably 2, 3, or 4 and more preferably 2 or 3.

The (i-1-A) component may be used alone or in combination of two or more kinds thereof.

The content of the (i-1-A) component is preferably in the range of 20-50 mass-% with respect to the total mass of the solid content of the composition used for forming the optical functional layer.

In addition, the phenoxyethyl (meth)acrylate is preferably in the range of 15-30 mass-% and more preferably 22-27 mass-% with respect to the total mass of the solid content of the composition used for forming the optical functional layer.

In addition, the compound represented by the formula (1) is preferably in the range of 5-20 mass-% and more preferably 5-15 mass-% with respect to the total mass of the solid content of the composition used for forming the optical functional layer.

In the above-described (i-1-A) component and the (i-1-B) component described below, the total mass ((i-1-A) + (i-1-B)) is preferably ≥ 50mass-% and more preferably 85-95 mass-% with respect to the total mass of the solid content of the composition used for forming the optical functional layer. When the total mass thereof is adjusted to be ≥ 50 mass-% with respect to the total mass of the solid content, the restorability for restoring the optical functional layer to the original shape can be improved.

### (i-1-B) (Meth)acrylic resin having two (meth)acryloyl groups as (i-1-B) active energy ray curable group

The (i-1-B) component is a (meth) acrylic resin having two (meth) acryloyl groups as an active energy ray curable group and may be a chain aliphatic, cyclic alicyclic, or aromatic (meth)acrylic resin containing heteroatoms such as halogen, sulfur, oxygen, or nitrogen. For example, a bifunctional (meth) acrylic resin described in JP-A-2009-37204 can be used.

Preferable examples of the (i-1-B) component include compounds represented by the following formula (B).

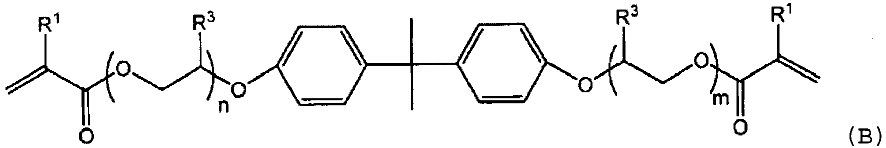

(In the formula (B), R¹ and R³ each independently are H or methyl and n and m each independently are a positive integer and satisfy 2 ≤ (n+m) ≤ 20

When the compound represen is used for forming the optical functional layer, together with the above-described phenoxyethyl (meth) acrylate and the compound represented by the formula (A), the flexibility of the optical functional layer is further improved and the restorability of the optical functional layer becomes excellent.

In the formula (B), n and m each independently are a positive integer and satisfy 2 ≤ (n+m) ≤ 20 Examples of respective values of n and m and the combination of n and m include "m + n = 2" when m is 1 and n is 1; "m + n = 4" when m is 3 and n is 1; "m + n = 4" when m is 2 and n is 2; "m + n = 10" when m is 6 and n is 4; "m + n = 10" when m is 8 and n is 2; "m + n = 10" when m is 5 and n is 5; "m + n = 20" when m is 12 and n is 8; and "m + n = 20" when m is 10 and n is 10. Further, from a viewpoint of improving the flexibility of a cured material, n and m are selected such that preferably the relationship 5 ≤ (n+m) ≤ 20, and more preferably 7 ≤ (n+m) ≤ 15 is satisfied.

The content of the compound of formula (B) is preferably i 25-50 mass-%, more preferably 30-50 mass-%, and particularly preferably f 35-45 mass-% with respect to the total mass of the solid content of the composition.

### (i-1-C) Other UV curable compounds with low elasticity

Other examples of the UV curable compound with low elasticity include monofunctional or multifunctional (meth)acrylic compounds such as ethoxylated o-phenylphenol acrylate, ethoxylated bisphenol A diacrylate, ε-caprolactone-modified tris(2-acryloxyethyl)isocyanurate, 2,4-dibromophenyl (meth)acrylate, 2,3,5-tribromophenyl (meth)acrylate, 2,2-bis(4-(meth)acryloyloxyphenyl)propane, 2,2-bis(4-(meth)acryloyloxyethoxyphenyl)propane, 2,2-bis(4-(meth)acryloyloxydiethoxyphenyl)propane, 2,2-bis(4-(meth)acryloylpentaethoxyphenyl)propane, 2,2-bis(4-(meth)acryloyloxyethoxy-3,5-dibromophenyl)propane, 2,2-bis(4-meth)acryloyloxydiethoxy-3,5-dibromophenyl)propan e, 2,2-bis(4-(meth)acryloyloxypentaethoxy-3,5-dibromophenyl)pr opane, 2,2-bis(4-(meth)acryloyloxyethoxy-3,5-dimethylphenyl)propan e, 2,2-bis(4-(meth)acryloyloxyethoxy-3-phenylphenyl)propane, bis(4-(meth)acryloyloxyphenyl)sulfone, bis(4-(meth)acryloyloxyethoxyphenyl)sulfone, bis(4-(meth)acryloyloxypentaethoxyphenyl)sulfone, bis(4-(meth)acryloyloxyethoxy-3-phenylphenyl)sulfone, bis(4-(meth)acryloyloxyethoxy-3,5-dimethylphenyl)sulfone, bis(4-(meth)acryloyloxyphenyl)sulfide, bis(methacryloylthiophenyl)sulfide, bis(4-(meth)acryloyloxyethoxyphenyl)sulfide, bis(4-(meth)acryloyloxypentaethoxyphenyl)sulfide, bis(4-(meth)acryloyloxyethoxy-3-phenylphenyl)sulfide, bis(4-(meth)acryloyloxyethoxy-3,5-dimethylphenyl)sulfide, di((meth)acryloyloxyethoxy)phosphate, and tri((meth)acryloyloxyethoxy)phosphate. These can be used alone or in combination of two or more kinds thereof.

Among these, as a low elastic resin which can be used as the main component of the optical functional layer, ethoxylated o-phenylphenol acrylate, ethoxylated bisphenol A diacrylate, or ε-caprolactone-modified tris(2-acryloxyethyl)isocyanurate can be preferably used and these may be used by combining plural kinds thereof.

Particularly, these low elastic resins can easily control the elasticity to be < 20 MPa by controlling a chain of ethyleneoxide related to ethoxylation to be longer (to the extent that the number of ethyleneoxide repeating units is 5-20).

Examples of the commercially available product of the low elastic resin whose elasticity is less than 20 MPa include NK ESTER A-LEN-10, A-BPE-10, and A9300-1CL (all manufactured by Shin Nakamura Chemical Co., Ltd.).

### (i-2) Monomer and oligomer capable of forming resin with high elasticity

A resin which can be used as a main component of the optical functional layer can adjust the elasticity measured by elasticity measurement to be 20 MPa or more. Such a resin with high elasticity has a low refractive index, but the upper layer of the optical functional layer is unlikely to be scratched, which is preferable. When the elasticity of the resin which can be used as the main component of the optical functional layer is adjusted to be larger, the elasticity thereof is preferably in the range of 20-2000 MPa and more preferably 100-1200 MPa.

As the monomer and the oligomer capable of forming a resin with high elasticity, acrylates described in JP-A-2008-94987 are exemplified.

Among these, phenoxyethyl acrylate, EO (ethyleneoxide)-modified TMPTA (trimethylol propane triacrylate), BrBPA (tetrabromobisphenol A skeleton-containing epoxy acrylate), ethyleneoxide addition bisphenol A methacrylic acid ester, and tribromophenoxy ethyl acrylate are preferable.

Further, the compounds of formula (B) may be used, but, in this case, n and m in formula (B) each independently represent preferably an integer of 1-4 and more preferably 1 or 2. Further, it is preferable that the value of "n + m" is set to be in the range of 2-4.

Particularly, these high elastic resins can easily control the elasticity to be ≥ 20 MPa by controlling a chain of ethyleneoxide to be shorter (to the extent that the number of ethyleneoxide repeating units is 1-4).

Examples of the commercially available product of the UV curable compound with high elasticity include Viscoat #192 (manufactured by OSAKA ORGANIC CHEMICAL INDUSTRY LTD.), SR349 (manufactured by Sartomer Company, Inc.), NK ESTER BPE-200, A-BPEF (both manufactured by Shin Nakamura Chemical Co., Ltd.), and NEW FRONTIER BR-31 (manufactured by DIC Corporation).

### (ii) Photopolymerization initiator

Examples and the preferable ranges of the photopolymerization initiator used for the optical functional layer (22) are the same as the examples and the preferable ranges of the photopolymerization initiator used for the second hard coat layer having the UV curing resin as a main component.

### (iii) Other additives

In regard to the detailed description of other binders or additives which can be used in combination with a low elastic resin whose elasticity is < 20 MPa, the contents in the paragraphs [0027] - [0060] of JP-A-2012-208376 can be applied to the present invention.

### <Easily adhesive layer>

The easily adhesive layer (21) is appropriately provided on one surface (A surface) side of the support (11) in order to improve adhesiveness of the support (11) with respect to the optical functional layer (22) and to improve adhesion force between the optical functional layer (22) and the support (11).

### (Composition)

The easily adhesive layer (21) is formed by coating one surface (A surface) of the support (11) with a coating liquid generally formed of a binder, a curing agent, and a surfactant. In addition, a binder may have self-crosslinking properties without using a curing agent and a self-crosslinking catalyst (for example, a catalyst for elastron, ELASTRON CAT-21)may be further added. Moreover, the easily adhesive layer (21) may appropriately contain a lubricant, an antifoaming agent, a foam suppressor, a dye, a fluorescent whitening agent, a preservative, a water-proofing agent, organic or inorganic fine particles, or distilled water as needed.

The binder used for the easily adhesive layer (21) is not particularly limited. However, from a viewpoint of adhesion force, it is preferable that the binder is at least one of polyester, polyurethane, an acrylic resin, a styrene butadiene copolymer, and an oxazoline resin. Further, the binder with water-soluble properties or water-dispersible properties is particularly preferable in terms of a small environmental load.

Polyester is a general term of a polymer whose main chain has an ester bond and can be generally obtained by a reaction between polycarboxylic acids and polyols. Examples of the polycarboxylic acid include fumaric acid, itaconic acid, adipic acid, sebacic acid, terephthalic acid, isophthalic acid, sulfoisophthalic acid, and naphthalene dicarboxylic acid and examples of the polyol include ethylene glycol, propylene glycol, glycerin, hexanetriol, butanediol, hexanediol, and 1,4-cyclohexanedimethanol. Polyester and the raw material thereof are described in "Handbook of Polyester Resin" (written by Eiichiro Takiyama, NIKKAN KOGYO SHIMBUN, LTD. , published in 1988) and the description can be applied to the present invention.

Further, examples of the polyester include polyhydroxy butyrate (PHB)-based, polycaprolactone (PCL)-based, polycaprolactone butylene succinate-based, polybutylene succinate (PBS)-based, polybutylene succinate adipate (PBSA)-based, polybutylene succinate carbonate-based, polyethylene terephthalate succinate-based, polybutylene adipate terephthalate-based, polytetramethylene adipate terephthalate-based, polybutylene adipate terephthalate-based, polyethylene succinate (PES)-based, polyglycolic acid (PGA) -based, and polylactic acid (PLA)-based materials, a carbonate copolymer of aliphatic polyester, and a copolymer of aliphatic polyester and polyamide. Examples of the commercially available products of polyester include Finetex ES650, ES2200 (manufactured by DIC Corporation), Vylonal MD1245, MD1400, MD1480 (manufactured by TOYOBO CO., LTD.), Pesurejin A-110, A-124GP, A-520, A-640 (manufactured by TAKAMATSU OIL & FAT CO., LTD.), Plascoat Z561, Z730, Z687, and Z592 (manufactured by GOO CHEMICAL CO., LTD.).

The polyurethane is a general term of a polymer whose main chain has a urethane bond and can be generally obtained by a reaction between polyisocyanates and polyols. Examples of the polyisocyanate include TDI (toluene diisocyanate), MDI (diphenylmethane diisocyanate), NDI (naphthalene diisocyanate), TODI (tolidine diisocyanate), HDI (hexamethylene diisocyanate), and IPDI (isophorone diisocyanate). Examples of the polyol include ethylene glycol, propylene glycol, glycerin, and hexanetriol. Further, as the isocyanate of the present invention, a polymer whose molecular weight is increased by applying a chain extension treatment to the polyurethane polymer obtained by the reaction between polyisocyanates and polyols can be used. The above-described polyisocyanate, polyols, and chain extension treatment are described in, for example, "Handbook of Polyurethane" (edited by Keiji Iwata, NIKKAN KOGYO SHIMBUN, LTD. , published in 1987) . Examples of the commercially available products of polyurethane include Superflex 470, 210, 150HS, Elastron H-3 (manufactured by DKS Co., Ltd.), Hydran AP-20, AP-40F, WLS-210 (manufactured by DIC Corporation), Takelac W-5100, W-6061, and OLESTER UD-350 (manufactured by Mitsui Chemicals, Inc.). A mode of dissociating an isocyanate compound blocked by a blocking agent and reacting urethane on a coating film to be self-crosslinked is preferable from a viewpoint of adhesiveness.

An acrylic resin is a polymer formed of a polymerizable monomer having a carbon-carbon double bond, which is represented by an acrylic monomer or a methacrylic monomer. The polymer may be a homopolymer or a copolymer. Further, a copolymer of the polymer and another polymer (for example, polyester or polyurethane) is included. For example, a block copolymer or a graft copolymer can be exemplified. Alternatively, a polymer (a mixture of polymers in some cases) obtained by polymerizing a polymerizable monomer having a carbon-carbon double bond in a polyester solution or a polyester dispersion liquid is included. Similarly, a polymer (a mixture of polymers in some cases) obtained by polymerizing a polymerizable monomer having a carbon-carbon double bond in a polyurethane solution or a polyurethane dispersion liquid is also included. In the same manner, a polymer (a mixture of polymers in some cases) obtained by polymerizing a polymerizable monomer having a carbon-carbon double bond in another polymer solution or a dispersion liquid is also included. Further, in order to further improve adhesiveness, a hydroxyl group or an amino group can be included. Examples of the polymerizable monomer having a carbon-carbon double bond as a particularly typical compound, which is not particularly limited, include various carboxylic group-containing monomers such as acrylic acid, methacrylic acid, crotonic acid, itaconic acid, fumaric acid, maleic acid, and citraconic acid and salts thereof; various hydroxyl group-containing monomers such as 2-hydroxyethyl(meth)acrylate, 2-hydroxypropyl(meth)acrylate, 4-hydroxybutyl (meth) acrylate, monobutyl hydroxy fumarate, and monobutyl hydroxy itaconate; various (meth) acrylic acid esters such as methyl(meth)acrylate, ethyl(meth)acrylate, propyl(meth)acrylate, butyl(meth)acrylate, and lauryl(meth)acrylate; various nitrogen-containing compounds such as (meth)acrylamide, diacetone acrylamide, N-methyloyl acrylamide, and (meth)acrylonitrile; various styrene derivatives such as styrene, α-methylstyrene, divinyl benzene, and vinyl toluene; various vinyl esters such as vinyl propionate; various silicon-containing polymerizable monomers such as γ-methacryloxy propyl trimethoxysilane, and vinyl trimethoxysilane; phosphorus-containing vinyl-based monomers; various halogenated vinyls such as vinyl chloride and vinylidene chloride; and various conjugated dienes such as butadiene. Examples of the commercially available products thereof include JURYMER ET-410 (manufactured by TOAGOSEI CO., LTD.) and EM48D (manufactured by Daicel Corporation) which is an acrylic acid ester copolymer.

As the oxazoline-based resin used for the easily adhesive layer (21), a polymer having an oxazoline group, for example, a polymer obtained by copolymerizing a polymerizable unsaturated monomer having an oxazoline group and another polymerizable unsaturated monomer as needed according to a known method (for example, solution polymerization or emulsion polymerization) can be exemplified. Examples of the polymerizable unsaturated monomer having an oxazoline group include monomers containing 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, or 2-isopropenyl-5-methyl-2-oxazoline in a unit of a monomer. Further, these may be used in combination of two or more kinds thereof.

Examples of the commercially available products of the oxazoline-based resin include water-soluble resins such as EPOCROS WS-500 and EPOCROS WS-700; emulsion resins such as EPOCROS K-2010, EPOCROS K-2020, EPOCROS K-2030, EPOCROS K-2010E, EPOCROS K-2020E, and EPOCROS K-2030E (all manufactured by NIPPON SHOKUBAI CO., LTD.).

As the crosslinking agent which can be used for the coating layer (21), the following substances (1)-(8) can be exemplified.
(1) Adducts of urea, melamine, benzoguamine, and formaldehyde
(2) Amino resin such as an alkylether compound formed of these adduct and alcohol having 1 to 6 carbon atoms
(3) Multifunctional isocyanate compound
(4) Block isocyanate compound
(5) Multifunctional aziridine compound
(6) Oxazoline compound (the preferable range is the same as that of the above-described oxazoline resin)
(7) Multifuntional epoxy compound
(8) Carbodiimide

Examples of the (2) amino resin include methoxylated methyloyl urea, methoxylated methylol N,N-ethylene urea, methoxylated methyloyl dicyandiamide, methoxylated methylol melamine, methoxylated methylol benzoguamine, butoxylated methylol melamine, and butoxylated methylol benzoguamine. Among these, methoxylated methylol melamine, buthoxylated methylol melamine, and methylolated benzoguamine are preferable.

Examples of the (3) multifunctional isocyanate compound include low molecular or high molecular weight aromatic or aliphatic diisocyanate, and tri- or higher valent polyisocyanate.

Examples of the polyisocyanate include tetramethylene diisocyanate, hexamethylene diisocyanate, toluene diisocyanate, diphenyl methane diisocyanate, hydrogenated diphenyl methane diisocyanate, xylylene diisocyanate, hydrogenated xylylene diisocyanate, isophorone diisocyanate, and a trimer of these isocyanate compounds.

Further, terminal isocyanate group-containing compounds obtained by reacting low molecular weight active hydrogen compounds such as an excessive amount of these isocyanate compounds, ethylene glycol, propylene glycol, trimethylol propane, glycerin, sorbitol, ethylene diamine, monoethanolamine, diethanolamine, and triethanolamine; and high molecular weight active hydrogen compounds such as polyester polyols, polyether polyols, and polyamides are exemplified.

The (4) block isocyanate is synthesized by adding and reacting the above-described isocyanate compounds and a blocking agent according to a known method.

Examples of the isocyanate blocking agent include (a) phenols such as phenol, cresol, xylenol, resorcinol, nitrophenol, and chlorophenol; (b) thiophenols such as thiophenol and methyl thiophenol; (c) oximes such as acetoxime, methyl ethyl ketoxime, and cyclohexanone oxime; (d) alcohols such as methanol, ethanol, propanol, and butanol; (e) halogen-substituted alcohols such as ethylene chlorohydrin and 1,3-dichloro-2-propanol; (f) tertiary alcohols such as t-butanol and t-pentanol; (g) lactams such as ε-caprolactam, δ-valerolactam, γ-butyrolactam, and β-propyllactam; (h) aromatic amines; (i) imides; (j) active methylene compounds such as acetylacetone, acetoacetic acid ester, and malonic acid ethyl ester; (k) mercaptans; (l) imines; (m)ureas; (n) diaryl compounds; and (o) sodium bisulfite. Among these, sodium bisulfite is more preferable.

Examples of the crosslinking agent containing phenols include a phenol formaldehyde resin of a condensate with formaldehyde such as alkylated phenols or cresols.

Examples of the phenol formaldehyde resin include condensates of formaldehyde and phenols such as alkylated (methyl, ethyl, propyl, isopropyl, or butyl) phenol, p-tert-amyl phenol, 4,4'-sec-butylidene phenol, p-tert-butyl phenol, o-cresol, m-cresol, p-cresol, p-cyclohexyl phenol, 4,4'-isopropylidene phenol, p-nonyl phenol, p-octyl phenol, 3-pentadecyl phenol, phenol, phenyl o-cresol, p-phenyl phenol, and xylate.

As a crosslinking agent which does not contain nitrogen atoms or phenols, the (7) multifunctional epoxy compound is exemplified. An amine-based crosslinking catalyst containing N (nitrogen atom) is frequently used for crosslinking of an epoxy compound. Since the amine-based crosslinking catalyst contains N, the catalyst is highly likely to be colored, e.g. due to heating. As a method of suppressing coloring, a method of reducing the amount of a catalyst or using a catalyst which does not contain an amine is exemplified. however, these methods are not preferable because crosslinking is not sufficiently performed or a gel-like mixture is increased at the time of recovery. Further, when a catalyst does not contain N, occasionally, stability of a reaction is poor, crosslinking is not sufficiently performed, or the molecular amount becomes excessively large since crosslinking advances excessively. When the molecular amount becomes excessively large, the compatibility between a first layer and polyester becomes degraded at the time when the first layer and a film base are recovered and recycled as described below. Here, the (7) multifunctional epoxy compounds may be used. In this manner, it is preferable that the first layer does not contain a compound which can be colored or a compound whose molecular amount is excessively large from a viewpoint of availability.

Examples of the multifunctional epoxy compound include diglycidyl ether of bisphenol A and an oligomer thereof, diglycidyl ether of hydrogenated bisphenol A and an oligomer thereof, orthophthalic acid diglycidyl ester, isophthalic acid diglycidyl ester, terephthalic acid diglycidyl ester, p-oxybenzoic acid diglycidyl ester, tetrahydrophthalic acid diglycidyl ester, hexahydrophthalic acid diglycidyl ester, succinic acid diglycidyl ester, adipic acid diglycidyl ester, sebacic acid diglycidyl ester, ethylene glycol diglycidyl ether, propylene glycol diglycidyl ether, 1,4-butanediol diglycidyl ether, 1,6-hexanediol diglycidyl ether, and polyalkylene glycol diglycidyl esters, trimellitic acid triglycidyl ester, triglycidyl isocyanurate, 1,4-diglycidyloxy benzene, diglycidyl propylene urea, glycerol triglycidyl ether, trimethylol propane triglycidyl ether, pentaerythritol triglycidyl ether, and triglycidyl ether of a glycerol alkylene oxide adduct.

Examples of the catalyst of a multifunctional epoxy compound include quaternary ammonium salts such as triethyl benzyl ammonium chloride or tetramethyl ammonium chloride; tertiary amine such as benzyl dimethylamine, tributylamine, or tris(dimethylamino)methylphenol; an imidazole compound such as 2-methyl-4-ethylimidazole or 2-methylimidazole; and a nitrogen-containing heterocyclic compound such as pyridine or methyl pyridine. Further, examples of the catalyst which does not contain an amine include a strong base such as sodium hydroxide or potassium hydroxide and a metal compound such as zinc borofluoride or tin tetrachloride.

In addition, examples of the (8) carbodiimide include commercially available carbodilite V-02-L2 (manufactured by Nisshinbo Holdings Inc.).

Among these crosslinking agents, blocked isocyanate is particularly preferable. Examples of a catalyst which can be added for promoting a reaction of the blocked isocyanate include an amine in addition to an organic metal compound such as organic tin, organic titanium, or organic zirconium.

The examples and the preferable ranges of the photopolymerization initiator which can be used for the easily adhesive layer (21) are the same as the examples and the preferable ranges of the surfactant used for the hard coat layer.

As the lubricant used for the easily adhesive layer (21), for example, an aliphatic wax is preferably used.

Specific examples of the aliphatic wax include a vegetable wax such as a carnauba wax, a candelilla wax, a rice wax, a Japan wax, jojoba oil, a palm wax, a rosin-modified wax, an ouricury wax, a sugar cane wax, an esparto wax, or a bark wax; an animal wax such as a bees wax, lanolin, a whale wax, an insect wax, or a shellac wax; a mineral wax such as a montan wax, ozocerite, or a ceresin wax; a petroleum-based wax such as a paraffin wax, a microcrystalline wax, or a petrolactam wax; and a synthetic hydrocarbon-based wax such as a Fischer-Tropsch wax, a polyethylene wax, a polyethylene oxide wax, a polypropylene wax, or a polypropylene oxide wax. Among these, a carnauba wax, a paraffin wax, and a polyethylene wax are particularly preferable. These are preferably used as a water dispersion because of a small environmental load and excellent handleability. Examples of the commercially available product include CELLOSOL 524 (manufactured by CHUKYO YUSHI CO. , LTD.).

The lubricant may be used alone or two or more kinds may be used in combination.

It is preferable that organic or inorganic fine particles which can be used for the easily adhesive layer (21) are transparent particles.

Examples of transparent particles include silica, calcium carbonate, magnesium carbonate, barium sulfate, polystyrene, a polystyrene-divinyl benzene copolymer, polymethyl methacrylate, crosslinked polymethyl methacrylate, a styrene-acryl copolymer, melamine, and benzoguanamine. Preferably, at least one kind of particles selected from a group of melamine resin particles, hollow particles, polystyrene resin particles, styrene-acryl copolymer resin particles, and silicone resin particles are used.

The particles may be used alone or in combination or two or more kinds thereof.

The volume average particle diameter r of the transparent particles is 0.02-3.0 µm, more preferably 0.03-2.0 µm, and still more preferably 0.04-1.5 µm.

The transparent particles may be used by mixing particles having two or more kinds of particle diameters. For example, the front brightness and rainbow irregularity can be both improved or the appearance of the film surface or blocking can be improved by changing the refractive indices of respective particles.

Examples of the commercially available product of organic or inorganic fine particles which can be used for the easily adhesive layer (21) include an acrylic resin particle MX-80H3WT, crosslinked PMMA particles MR-2G (both manufactured by Soken Chemical & Engineering Co., Ltd.), and silica particles SEAHOSTER KE-W10 (manufactured by NIPPON SHOKUBAI CO., LTD.).

### (Characteristics)

The thickness of the easily adhesive layer can be controlled by adjusting the coating amount of a solution for adhesion that forms the easily adhesive layer (21). In order to improve the transparency and express excellent adhesion force, the thickness T21 is more preferably constant in the range of 0.01-5 µm. When the thickness T21 is adjusted to be ≥ 0.01 µm, the adhesion force can be more reliably improved compared to the case where the thickness thereof is < 0.01 µm. When the thickness T21 is ≤ 5 µm, the easily adhesive layer (21) whose thickness is more uniform can be formed compared to the case where the thickness T21 is > 5 µm. Further, it is possible to prevent the drying time from being prolonged by suppressing an increase in the amount of a solution for adhesion to be used and to suppress an increase in the cost. The thickness T21 is more preferably 0.02-3 µm.

### (Lamination structure)

Moreover, the easily adhesive layer (21) may be formed of a single layer or a plurality of layers. In a case where the easily adhesive layer (21) is formed of a plurality of layers, the total thickness of the respective easily adhesive layers (21) is set to the thickness T21.

### <Method of producing laminated film>

The method of producing the laminated film of the present invention is not particularly limited, and the laminated film of the present invention can be produced by appropriately changing the method described in the paragraphs [0116] - [0148] of JP-A-2011-123270 and the device described in Figs. 7 and 8 of the same publication according to the present invention to be used.

### (Formation of support)

A method of producing the support is not particularly limited and the support can be produced using the method described in JP-A-2011-123270.

### (Formation of easily adhesive layer)

As a method of forming the easily adhesive layer on the support, a method of coating the support with a solution for an easily adhesive layer is preferable. Further, the support may be coated with the solution for an easily adhesive layer in the inside of a support producing device. For example, a base material before entering a stretching machine may be coated with the solution for an easily adhesive layer or the coating may be carried out between a first stretching process and a second stretching process in a case where the second stretching process is performed after the first stretching process.

### (Formation of hard coat layer)

From a viewpoint of improving the adhesiveness between the hard coat layer and the support in a case where the hard coat layer and the support are laminated in a state in which they are in contact with each other, it is preferable that the hard coat layer (12) is formed of a coating composition of a liquid.

The support (11) on which the easily adhesive layer is formed is continuously guided to a hard coat layer forming device. The hard coat layer forming device includes a coater that coats the support (11) with the coating liquid for a hard coat layer and a heater that heats and dries the coating liquid for a hard coat layer. In the hard coat layer forming device, the support (11) being transported is coated with the coating liquid for a hard coat layer and the coating film is heated by the heater to be cured, thereby obtaining a hard coat layer.

A method of forming the easily adhesive layer (21) and the hard coat layer (12) is not particularly limited and coating may be performed by appropriately selecting a known coater according to the purpose thereof. For example, coating can be performed using a spin coater, a roll coater, a bar coater, a curtain coater, or a gravure coater.

For a method of curing the coating liquid for the coated hard coat layer, the same method as UV curing for the optical functional layer described below can be used.

### (Formation of optical functional layer)

As the method of forming the optical functional layer, a known method can be used.

The optical functional layer (22) which is a prism layer or a lens layer can be formed according to an embossing method or a casting polymerization method, but the casting polymerization method with productivity higher than the embossing method is generally used.

In the casting polymerization method, a plurality of predetermined prisms or lenses are formed by forming a film formed of a UV curable compound which is cured by ultraviolet rays (UV) to have a predetermined shape and allowing the compound to be cured using UV rays in a state of maintaining the shape, thereby obtaining the optical functional layer (22) . From a viewpoint of mass production, a casting polymerization method is preferable than an embossing method and a casting polymerization method using a UV curable compound is preferable among various casting polymerization methods.

In general, the main emission wavelength of a metal halide lamp to be used for UV curing is in the range of 340-400 nm and the main emission wavelength of a high-pressure mercury lamp is 365 nm.

In a case of forming a prism layer as the optical functional layer, the prism layer can be produced according to the method described in JP-A-2011-123270 using the device described in Fig. 8 of JP-A-2011-123270. An example of a method of forming a prism layer will be described below, but the present invention is not limited to the following example.

In the device described in Fig. 8 of JP-A-2011-123270, unevenness whose sections are triangular is formed, in order to shape a prism, on a peripheral surface of a roller for forming a prism. The roller for forming a prism rotates in the circumferential direction and the laminated film of the present invention is interposed between a nip roller and the roller for forming a prism. The laminated film of the present invention on the upstream side of a position in which the laminated film is interposed between the nip roller and the roller for forming a prism is wounded around the nip roller and the laminated film of the present invention on the downstream side of the position in which the laminated film is interposed therebetween is wounded around the roller for forming a prism. In this manner, the laminated film of the present invention continuously forms a plurality of prisms while being transported by the nip roller and the roller 111 for forming a prism.

A light source for photocuring a coating film formed of a coating liquid for a prism layer is disposed on the hard coat layer (12) side of the laminated film of the present invention and in the lower portion of the roller for forming a prism. The light source irradiates the coating film formed of the coating liquid for a prism layer with light through the hard coat layer (12), the support (11), and the easily adhesive layer.

### [Display device]

A display device of the present invention includes the laminated film of the present invention.

The display device of the present invention includes preferably at least one laminated film of the present invention and more preferably two laminated films.

The display device of the present invention is not particularly limited and a display device having a known configuration and also having the laminated film of the present invention can be exemplified as the display device of the present invention.

It is preferable that the display device of the present invention includes an edge light unit including a reflective sheet, a light source (for example, an LED light source), a light guide plate, or a diffusion film and more preferable that the laminated film of the present invention and the diffusion film are laminated with each other such that the top of the prism of the optical functional layer of the laminated film is orthogonal to the diffusion film.

The display device of the present invention is not particularly limited and various display devices can be used for the display device of the present invention, but a liquid crystal display device is preferable.

In addition, as preferable modes of the display device of the present invention, modes described in JP-A-2013-047794 can be exemplified.

### [Examples]

The characteristics of the present invention will be described in detail with reference to Examples and Comparative Examples (Comparative Examples are not the same as the known techniques) below. Materials, the used amounts, the rates, the contents of treatments, and the procedures of the treatments shown in Examples described below can be appropriately changed within the range not departing from the scope of the present invention. Accordingly, the range of the present invention is not limited to the examples described below.

### [Example 1]

### <Preparation of support>

Polyethylene terephthalate (hereinafter, referred to as "PET") resin in which a Ti compound was polycondensed as a catalyst and whose intrinsic viscosity was 0.66 was dried to have a moisture content of ≤ 50 ppm and dissolved in an extruder at which a set heater temperature was in the range of 280-300°C. The dissolved PET resin was ejected onto a chill roll electrostatically applied from a die portion, thereby obtaining an amorphous base. The obtained amorphous base was stretched at a stretch ratio of 3.1 times in the base travelling direction, a coating liquid A for an easily adhesive layer described below was dried, and the amorphous base was coated in-line coating with the coating liquid A such that the thickness after stretching became 80 nm and then stretched at a stretch ratio of 3.8 times in the width direction, thereby obtaining a PET support to which in-line coating is applied having a thickness of 250 µm.

**(Coating liquid A for easily adhesive layer)**

| | |
|---|---|
| Self-crosslinking urethane | 91 pbm |
| (*Elastron H3,* DKS Co., Ltd.) | |
| Catalyst for Elastron, | 1.1 pbm |
| (*Elastron cat-21,* (DKS Co., Ltd.) | |
| Polyester resin | 55 pbm |
| *(ES2200* ,DIC Corporation) | |
| Anionic surfactant | 0.2 pbm |
| (*RAPISOL B-90,* NOR CORPORATION) | |
| Distilled water | α pbm |

(α: the amount thereof was adjusted such that the entirety of the coating liquid A for an easily adhesive layer became 1000 pbm)

### <Preparation of easily adhesive layer>

After a corona discharge treatment was performed on the coating layer side of the coating liquid A for an easily adhesive layer of the above-described PET support to which in-line coating is applied under the condition of 730 J/m², the corona-treated surface side was coated with a coating liquid B for an easily adhesive layer described below according to a bar coating method. In addition, an easily adhesive layer was provided on one surface of the PET support by drying the surface at a temperature of 145°C for 1 minute.

**(Coating liquid B for easily adhesive layer)**

| | |
|---|---|
| Polyester resin binder | 12.0 pbm |
| (*Plascoat Z592,* GOO CHEMICAL CO., LTD.) | |
| Water dispersion of polyether polyester urethane resin | 51.0 pbm |
| (*Superflex 150HS,* DKS Co., Ltd.) | |
| Aqueous emulsion of oxazoline resin | 7.7 pbm |
| (*EPOCROS K-2020E*, NIPPON SHOKUBAI CO., LTD.) | |
| Acrylic resin | 69.3 pbm |
| *(EM48D,* Daicel Corporation) | |
| Nonionic surfactant | 29.7 pbm |
| (1% aqueous solution of *Naroacty CL-95,* Sanyo Chemical Industries, Ltd., nonionic) | |
| Anionic surfactant | 12.3 pbm |
| ((1% aqueous solution of *RAPISOL B*-*90*, NOR CORPORATION), anionic) | |
| Carnauba wax dispersion | 0.6 pbm |
| (*CELLOSOL 524,* CHUKYO YUSHI CO., LTD.) | |
| Acrylic resin fine particles | 0.21 pbm |
| (*MX*-*80H3WT*, Soken Chemical & Engineering Co., Ltd., average particle diameter: 0.8 µm) | |
| Distilled water | α pbm |

(α: the amount thereof was adjusted such that the entirety of the coating liquid B for an easily adhesive layer became 1000 pbm)

### <Preparation of hard coat layer (sol gel)>

After a corona discharge treatment was performed on the opposite surface of a coating layer side of the PET support for which the easily adhesive layer is provided under the condition of 310 J/m², the surface was coated with a coating liquid A for a hard coat layer formed of the following composition according to a bar coating method. The surface was coated with the coating liquid such that the coated film thickness became 130 nm at the time of drying the coated surface and then dried at 145°C for 1 minute. In this manner, a hard coat layer (sol gel) was formed on the opposite side of the surface on which the easily adhesive layer of the PET support was formed.

**(Coating liquid A for hard coat layer (sol gel))**

| | |
|---|---|
| Acetic acid aqueous solution | 402.0 pbm |
| (Daicel Corporation, 1% aqueous solution of industrial acetic acid) | |
| 3-glycidoxy propyl triethoxysilane | 110.0 pbm |
| *(KBE-403,* Shin-Etsu Chemical Co., Ltd.) | |
| Tetraethoxysilane | 127.6 pbm |
| *(KBE-04,* Shin-Etsu Chemical Co., Ltd.) | |
| Curing agent (aluminum trisacetyl acetonate) | 1.3 pbm |
| (*Aluminum chelate A(W),* Kawaken Fine Chemicals Co., Ltd.) | |
| Surfactant | 14.7 pbm |
| (10% aqueous solution of *Sandeddo BL,* Sanyo Chemical Industries, Ltd., anionic) | |
| Surfactant | 40.9 pbm |
| (1% aqueous solution of *Naroacty CL-95,* Sanyo Chemical Industries, Ltd., nonionic) | |
| Distilled water | α pbm |

(α: the amount thereof was adjusted such that the entirety of the coating liquid A for a hard coat layer became 1000 pbm)

The coating liquid A for a hard coat layer was prepared using the following method.

3-glycidoxy propyl triethoxysilane was added dropwise to an acetic acid aqueous solution for 3 minutes while the acetic acid aqueous solution was violently stirred in a thermostatic chamber whose temperature was 25°C. After the solution was stirred for 1 hour, tetraethoxysilane was added for 5 minutes while the acetic acid aqueous solution was strongly stirred in the thermostatic chamber whose temperature was 30°C, and then the solution was stirred for 2 hours. Further, the solution was cooled to 10°C for 1 hour. In addition, inorganic particles other than the hydrolyzate of alkoxysilane (for example, colloidal silica) was not added thereto. The aqueous solution obtained in this manner was set to an aqueous solution X.

Further, a curing agent, surfactants C and B, and distilled water were added thereto and subjected to ultrasonic dispersion for 5 minutes. The dispersion liquid obtained in this manner was set to an aqueous solution Y.

The aqueous solution Y, the surfactants C and B, and the distilled water were sequentially added to the aqueous solution X, and then the solution was cooled to 10°C.

A silicon wafer was coated with the coating liquid A for a hard coat layer such that the dried film thickness was in the range of 3 µm to 4 µm and the silicon wafer was dried at a temperature of 105°C for 10 minutes. The refractive index of a sample was measured according to a prism coupler method using SPA-400 (manufactured by Sairon Technology, Inc.) at a wavelength 660 nm, 850 nm, 1310 nm, or 1550 nm. The refractive index at a wavelength of 550 nm was acquired according to the Sellmeier formula based on the refractive index and the wavelength. It was understood that the refractive index at a wavelength of 550 nm of a thin film coated with the coating liquid A for a hard coat layer was 1.480.

### <Preparation of prism layer>

A prism layer was formed on a surface on which the easily adhesive layer of the PET support, on which the hard coat layer was formed, was formed. A mold used for forming a prism pattern was filled with a coating liquid (hereinafter, referred to as a coating liquid A for forming a prism layer) that forms a prism layer described below. The coating liquid A for forming a prism layer contains a compound cured by UV rays. An optical film was pressed against the mold by a roller such that the easily adhesive layer of the PET support on which the hard coat layer was formed was in contact with the coating liquid A for forming a prism layer on the mole. After 3 seconds from when the coating liquid A for forming a prism layer was started to be in contact with a layer formed using the coating liquid B for forming an easily adhesive layer among easily adhesive layers, the hard coat layer side of the PET support on which the hard coat layer was formed was irradiated with UV rays and cured under the condition of 1000 mJ/cm². As a light source from which UV rays was applied, a metal halide lamp UVL-1500M2 (manufactured by USHIO INC.) was used. The PET support forming a hard coat layer from a mold and the cured prism layer were peeled from the mole, thereby obtaining a prism sheet including a prism layer having an apex angle of 90°, a pitch of 60 µm, and a height of 30 µm.

The obtained prism sheet was used as a laminated film of Example 1.

The composition of the coating liquid A for a prism layer is as follows (elastic modulus after curing the entire resins: 1139 MPa)

| | |
|---|---|
| Phenoxy ethyl acrylate | 21 pbm |
| *(Viscoat* #*192*, OSAKA ORGANIC CHEMICAL INDUSTRY LTD.) | |
| EO-modified TMPTA | 74 pbm |
| (trimethylol propane triacrylate) (*SR349,* Sartomer Company, Inc.) | |
| Photopolymerization initiator | 5 pbm |
| (*IRGACURE* 184, BASF Japan Ltd.) | |

The elastic modulus after the entire resins contained in the coating liquid A for a prism layer described above and the coating liquid B for a prism layer described below were cured was measured according to the following method.

A PET film without undercoating was coated with resin, further overlapped with a PET film, irradiated with UV rays which were the same as those used for generating a prism under the condition of 1000 mJ/cm² and then cured. As a light source from which UV rays were applied, a metal halide lamp UVL-1500M2 (manufactured by USHIO INC.) was used. After exposure, the PET film on both sides was peeled and thus a resin film having a thickness of 10 µm was generated. The obtained resin film was cut to have a dimension of 5 mm × 2 cm, a tensile test was performed on the resin film using a Tensilon test machine at 10 cm/min, and then the elastic modulus thereof was measured.

### [Examples 2-4 and Comparative Examples 1 and 2]

Laminated films of Examples 2-4 and Comparative Examples 1 and 2 were produced in the same manner as that of Example 1 except that a hard coat layer with the coated thickness listed in Table 1 was generated by changing the coating amount of the coating liquid A for a hard coat layer (sol gel).

### [Examples 5 and 6 and Comparative Examples 3 and 4]

Laminated films of Examples 5 and 6 and Comparative Examples 3 and 4 were produced in the same manner as that of Example 1 except that the hard coat layer with the coated thickness listed in Table 1 was formed as a hard coat layer by drying the coating liquid B for a hard coat layer, coating a layer with the coating liquid B such that the film thickness after curing became 80 nm, drying the layer at 150°C for 2 minutes, irradiating the layer with a high-mercury lamp at an irradiation distance of 150 mm for 40 seconds such that the layer has an energy of 120 W/cm, and changing the coating amount of the coating liquid B for a hard coat layer.

**<Coating liquid B for hard coat layer (UV curing resin) >**

| | |
|---|---|
| Multifunctional acrylic monomer | 45 pbm |
| (*Aronix M-405,* TOAGOSEI CO., LTD.) | |
| Multifunctional acrylic monomer | 14 pbm |
| (*Aronix M-350,* TOAGOSEI CO., LTD.) | |
| Photopolymerization initiator | 1.2 pbm |
| (*IRGACURE 184,* BASF Japan Ltd.) | |
| Surfactant | 0.1 pbm |
| (*Megafac F780F,* DIC Corporation) | |
| MEK | 30 pbm |

In addition, it was understood that the refractive index at a wavelength of 550 nm of a thin film coated with the coating liquid B for a hard coat layer was measured in the same manner as that of the coating liquid A for a hard coat layer was 1.489.

### [Comparative Example 5]

A laminated film of Comparative Example 5 was produced in the same manner as that of Example 1 except that the coating liquid A for a hard coat layer was not used and a hard coat layer was not formed.

### [Comparative Example 6]

A coating liquid A for a rear surface layer having the following composition was applied in place of the coating liquid A for a hard coat layer using the bar coating method according to the materials and the production conditions described in Example 1 of JP-A-2009-199001. The coating amount was set to be 7.1 cc/m² and the coated layer was dried at 175°C for 1 minute. A laminated film of Comparative Example 6 was produced in the same manner as that of Example 1 except that a hard coat layer with a thickness of 90 nm, for which a thermosetting resin was used was formed.

**(Coating liquid A for rear surface layer)**

| | |
|---|---|
| Acrylic resin binder | 42.6 pbm |
| *(EM48D,* Daicel Corporation, solid content: 27.5%) | |
| Compound having plural carbodiimide Structures | 4.8 pbm |
| (Carbodilite V-02-L2, Nisshinbo Holdings Inc., solid content: 40%) | |
| Surfactant A | 15.8 pbm |
| (1% aqueous solution of *RAPISOL B-90,* NOR CORPORATION, anionic) | |
| Surfactant B | 15.8 pbm |
| (1% aqueous solution of *Naroacty CL-95,* Sanyo Chemical Industries, Ltd., nonionic) | |
| Silica fine particle dispersion liquid | 1.9 pbm |
| (*Aerosil OX-50,* Nippon Aerosil Co., Ltd., solid content: 10%) | |
| Colloidal silica | 0.8 pbm |
| (*Snowtex XL,* NISSAN CHEMICAL INDUSTRIES, LTD., solid content: 40.5%) | |
| Lubricant | 1.9 pbm |
| (Carnauba wax dispersion *CELLOSOL 524 ,* CHUKYO YUSHI CO., LTD., solid content: 30%) | |

Distilled water Added such that the total amount thereof became 1000 pbm

### [Examples 7-12 and Comparative Examples 7-12]

Laminated films of Examples 7-12 and Comparative Examples 7-12 were produced in the same manner as those of Examples 1-6 and Comparative Examples 1-6 except that a coating liquid B for a prism layer was used as a coating liquid for a prism layer.

The composition of the coating liquid B for a prism layer (elastic modulus of a resin: 18 MPa) is as follows.

| | |
|---|---|
| Ethoxylated o-phenylphenol acrylate | 20 pbm |
| (*NK ESTER A-LEN-10,* Shin Nakamura Chemical Co., Ltd.) | |
| Ethoxylated bisphenol A diacrylate | 72 pbm |
| (*NK ESTER A-BPE-10,* Shin Nakamura Chemical Co., Ltd.) | |
| ε-caprolactone-modified tris(2-acryloxyethyl) isocyanurate | 3 pbm |
| (*NK ESTER A9300-1CL,* Shin Nakamura Chemical Co., Ltd.) | |
| Photopolymerization initiator | 5 pbm |
| (*IRGACURE 184,* BASF Japan Ltd.) | |

### [Preparation and evaluation of display device and evaluation of laminated film]

### (Adhesiveness)

After the laminated films of respective Examples and respective Comparative Examples were aged under the conditions of a temperature of 65°C and a relative humidity of 95% for 500 hours, the surface of a hard coat surface was damaged by making eleven scratches at an interval of 1 mm in the vertical direction and the horizontal direction using a single-edged razor, cellophane tape (No. 400, width: 24 mm, manufactured by 3M Japan Limited was stuck thereon), the cellophane tape was rubbed with an eraser such that the surface and the cellophane tape were tightly adhered to each other, the cellophane tape was peeled from the surface twice in the direction of an angle of 90°, and then ranking was performed by counting the number of squares peeled from the surface.
A: There were no squares separated from the surface
B: The number of squares separated from the surface was in the range of 1 to < 5
C: The number of squares separated from the surface was 5 or more and practically insufficient

The results are listed in Table 1

### (Pencil hardness)

After laminated films of respective Examples and respective Comparative Examples were humidified under the conditions of a temperature of 25°C and a relative humidity of 60% for 2 hours, the pencil hardnesses of hard coat layers included in respective laminated films were evaluated using pencils for a test in conformity with JIS-S6006 according to a pencil hardness evaluation method in conformity with JIS-K5400. Specifically, the surface of the hard coat layer was scratched 5 times with pencils having different hardnesses using a 500 g weight and the hardness with one scratch was measured.

The pencil hardness is practically required to be HB or higher, preferably F or higher, more preferably H or higher, and particularly preferably 2H or higher.

The results are listed in Table 1.

### [Scratch resistance test]

The laminated films of respective Examples and respective Comparative Examples were cut to have a dimension of 30 cm × 37 cm. One sheet was cut such that the top of a prism was parallel to the side having a length of 37 cm and another sheet was cut such that the top of the prism was parallel to the side having a length of 30 cm. Ten sheets were alternately arranged in a box having a dimension of 30.5 mm × 37.5 mm and transported from Tokyo to Fukuoka using a truck. Next, the extent of scratches on the rear surfaces of eight hard coat layers excluding 2 sheets of layers present on the top and the bottom in the box was confirmed.
A: There were no scratches found
B: The number of scratches found on the surfaces was in the range of 1 to < 3
C: The number of scratches found on the surfaces was in the range of > 3 to < 7
D: The number of scratches found on the surfaces was ≥ 7

The scratch resistance is preferably C or higher and more preferable B or higher.

The results are listed in Table 1.

### <Brightness>

After two laminated films of respective Examples and Comparative Examples were placed on a diffusion film of an edge light unit for a liquid crystal television configured of a reflective sheet, an LED light source, a light guide plate, and a diffusion film such that the top of the prism was orthogonal to the laminated films, display devices of respective Examples and respective Comparative Examples were prepared.

The front brightness on the prism side was measured using the obtained display devices of respective Examples and respective Comparative Examples with a chromameter (BM-7, manufactured by TOPCON TECHNOHOUSE CORPORATION). The brightness in a case where a prism sheet was not placed on a display device was set to 100% and an increase in the brightness in a case where the prism sheet was placed thereon was evaluated based on the following criteria.
A: The increase rate of the brightness was ≥ 160%
B: The increase rate of the brightness was in the range of 155 to < 160%
C: The increase rate of the brightness was in the range of 150% to < 155%
D: The increase rate of the brightness was < 150% and practically insufficient

The results are listed in Table 1 below.

**[Table 1]**

| | Hard coat layer | | | | Optical functional layer | | Evaluation | | | |
|---|---|---|---|---|---|---|---|---|---|---|
| | Coating liquid for hard coat layer | Thickness [nm] | Alkoxysilane having functional group other than hydroxyl group | Inorganic particles other than hydrolyzate of alkoxysilane | Type | Elastic modulus [MPa] | Adhesiveness between support and hard coat layer | Pencil hardness of hard coat layer | Scratch resistance of hard coat layer | Brightness |
| Example 1 | Sol gel | 130 | 46.3mol% | Not present | A | 1139 | A | H | B | B |
| Example 7 | | | | | B | 18 | | | A | B |
| Example 2 | Sol gel | 100 | 46.3mol% | Not present | A | 1139 | A | H | B | B |
| Example 8 | | | | | B | 18 | | | A | B |
| Example 3 | Sol gel | 55 | 46.3mol% | Not present | A | 1139 | A | H | B | B |
| Example 9 | | | | | B | 18 | | | A | B |
| Comparative Example 1 | Sol gel | 1000 | 46.3mol% | Not present | A | 1139 | C | 2H | B | D |
| Comparative Example 7 | | | | | B | 18 | | | A | D |
| Comparative Example 2 | Sol gel | 200 | 46.3mol% | Not present | A | 1139 | B | 2H | B | D |
| Comparative Example 8 | | | | | B | 18 | | | A | D |
| Example 4 | Sol gel | 40 | 46.3mol% | Not present | A | 1139 | A | F | C | B |
| Example 10 | | | | | B | 18 | | | D | C |
| Comparative Example 3 | UV curing | 1000 | - | Not present | A | 1139 | C | 2H | B | D |
| Comparative Example 9 | | | | | B | 18 | | | A | D |
| Comparative Example 4 | UV curing | 200 | - | Not present | A | 1139 | C | H | B | D |
| Comparative Example 10 | | | | | B | 18 | | | A | D |
| Example 5 | UV curing | 100 | - | Not present | A | 1139 | A | F | D | B |
| Example 11 | | | | | B | 18 | | | D | B |
| Example 6 | UV curing | 55 | - | Not present | A | 1139 | A | HB | D | B |
| Example 12 | | | | | B | 18 | | | D | B |
| Comparative Example 5 | None | - | - | Not present | A | 1139 | - | HB | D | D |
| Comparative Example 11 | | | | | B | 18 | | | D | D |
| Comparative Example 6 | Thermosetting | 90 | - | Not present | A | 1139 | A | B | D | B |
| Comparative Example 12 | | | | | B | 18 | | | D | B |

As listed in Table 1 above, it is understood that the laminated film of the present invention has excellent brightness and in which a hard coat layer has high hardness and the adhesiveness between the hard coat layer and a support is excellent.

Meanwhile, in Comparative Examples 1-4 and 7-10 in which the thickness of the hard coat layer exceeds the upper limit of the invention, it is understood that the brightness is insufficiently improved and the adhesiveness between the hard coat layer and the support is more insufficient than that of Comparative Examples 1, 3, 4, 7, 9, and 10. In Comparative Examples 5 and 11 without the hard coat layer being provided, it is understood that the brightness is insufficiently improved. In Comparative Examples 6 and 12 using a thermosetting resin as a hard coat layer, it is understood that the hardness of the hard coat layer is insufficient.

Further, effects of preferable modes of the present invention can be understood from Table 1 above. In Examples using sol gel as a main component of the hard coat layer, it is understood that hard coating properties are exhibited even in a case of a thin film thickness with respect to a hard coat layer using acrylate which is a UV curing resin as a main component of the hard coat layer. It is understood that the brightness and the hard coating properties can be both improved when sol gel is used compared to a case of a hard coat layer using acrylate which is a UV curing resin although the film thickness suitable for an increase in the brightness is not changed in both cases. In addition, it is understood that effects of improving the scratch resistance can be easily exhibited in a case of using a low elastic resin as a main component of an optical functional layer.

### Reference Signs List

- (10):: Laminated film
- (11):: Support
- (12):: Hard coat layer
- (21):: Easily adhesive layer
- (22):: Optical functional layer

## Claims

1. A laminated film (10) including:
- a support (11);
- an optical functional layer (22) which is provided on one surface, that is A surface, side of the support and condenses or diffuses incident light; and
- a hard coat layer (12) which is provided on the outermost layer of a surface, that is B surface, side on the opposite side of the A surface of the support on which the optical functional layer is provided and has an inorganic component formed of a hydrolyzate of alkoxysilane or a UV curable resin as a main component,
wherein the hard coat layer (12) has a thickness of ≤ 150 nm.

2. The laminated film (10) of Claim 1, wherein the hard coat layer (12) is laminated to be in contact with the support (11).

3. The laminated film (10) of Claim 1 or 2, wherein the hard coat layer (12) has a thickness of 50-150 nm.

4. The laminated film (10) of any of Claims 1-3, which contains an alkoxysilane including one or more organic functional groups other than a hydroxyl group as the alkoxysilane.

5. The laminated film (10) of any of Claims 1-4, wherein a ratio of the alkoxysilane having one or more of the organic functional groups other than the hydroxyl group to the entirety of the alkoxysilane contained in the hard coat layer (12) is ≥ 30 mol-%.

6. The laminated film (10) of any of Claims 1-5, wherein the hard coat layer (12) is free from inorganic particles other than the hydrolyzate of the alkoxysilane.

7. The laminated film (10) of any of Claims 1-3, wherein the UV curable resin is cured by irradiating a composition containing at least one of a monomer and an oligomer and a photopolymerization initiator with UV rays.

8. The lamination film (10) of Claim 7, wherein the monomer or the oligomer includes two or more polymerizable double bonds in a molecule.

9. The laminated film (10) of any of Claims 1-8, wherein the main component of the optical functional layer (22) is a resin having an elastic modulus of < 20 MPa.

10. The laminated film (10) of any of Claims 1-8, wherein the main component of the optical functional layer (22) is a resin having an elastic modulus of ≥ 20 MPa.

11. A display device including the laminated film (10) of any of Claims 1-10.

## Patentansprüche

1. Geschichtete Folie (10), enthaltend:
- einen Träger (11);
- eine optische funktionelle Schicht (22), die auf einer Seite der Oberfläche, die die A-Oberfläche ist, des Trägers vorgesehen ist und einfallendes Licht kondensiert oder streut; und
- eine Hartschichtbeschichtung (12), die vorgesehen ist auf der äußersten Schicht einer Seite der Oberfläche, die die B-Oberfläche ist, auf der entgegengesetzten Seite der A-Oberfläche des Trägers, auf der die optische funktionelle Schicht vorgesehen ist, und eine aus einem Hydrolysat von Alkoxysilan oder einem UV-härtbaren Harz gebildete anorganische Komponente als eine Hauptkomponente aufweist,
wobei die Hartschichtbeschichtung (12) eine Dicke von ≤ 150 nm aufweist.

2. Geschichtete Folie (10) nach Anspruch 1, wobei die Hartschichtbeschichtung (12) geschichtet ist, um mit dem Träger (11) in Kontakt zu sein.

3. Geschichtete Folie (10) nach Anspruch 1 oder 2, wobei die Hartschichtbeschichtung (12) eine Dicke von 50-150 nm aufweist.

4. Geschichtete Folie (10) nach einem der Ansprüche 1-3, die als das Alkoxysilan ein Alkoxysilan enthält, das eine oder mehrere von einer Hydroxylgruppe verschiedene organische funktionelle Gruppen enthält.

5. Geschichtete Folie (10) nach einem der Ansprüche 1-4, wobei ein Anteil des eine oder mehrere der von einer Hydroxylgruppe verschiedenen organischen funktionellen Gruppen aufweisenden Alkoxysilans zu der Gesamtheit des in der harten Beschichtungsschicht (12) enthaltenen Alkoxysilans ≥ 30 Mol-% ist.

6. Geschichtete Folie (10) nach einem der Ansprüche 1-5, wobei die Hartschichtbeschichtung (12) frei von anorganischen Teilchen ist, die von dem Hydrolysat des Alkoxysilans verschieden sind.

7. Geschichtete Folie (10) nach einem der Ansprüche 1-3, wobei das UV-härtbare Harz durch Bestrahlen einer Zusammensetzung, die mindestens eines von einem Monomer und einem Oligomer und einen Photopolymerisationsstarter für UV-Strahlen enthält, gehärtet wird.

8. Schichtungsfolie (10) nach Anspruch 7, wobei das Monomer oder das Oligomer zwei oder mehrere polymerisierbare Doppelbindungen in einem Molekül enthält.

9. Geschichtete Folie (10) nach einem der Ansprüche 1-8, wobei die Hauptkomponente der optischen funktionellen Schicht (22) ein Harz mit einem Elastizitätsmodul von < 20 MPa ist.

10. Geschichtete Folie (10) nach einem der Ansprüche 1-8, wobei die Hauptkomponente der optischen funktionellen Schicht (22) ein Harz mit einem Elastizitätsmodul von ≥ 20 MPa ist.

11. Anzeigevorrichtung, die eine geschichtete Folie (10) nach einem der Ansprüche 1-10 enthält.

## Revendications

1. Film stratifié (10) comprenant :
- un support (11) ;
- une couche fonctionnelle optique (22) qui est prévue sur un côté de surface, c'est-à-dire une surface A, du support, et qui condense ou diffuse la lumière incidente ; et
- une couche de revêtement dur (12) qui est ménagée sur la couche la plus externe d'un côté de surface, c'est-à-dire une surface B, sur le côté opposé de la surface A du support sur lequel la couche fonctionnelle optique est ménagée et comporte un composant inorganique formé d'un hydrolysat d'alcoxysilane ou d'une résine durcissable par UV comme composant principal,
dans lequel la couche de revêtement dur (12) présente une épaisseur ≤ 150 nm.

2. Film stratifié (10) selon la revendication 1, dans lequel la couche de revêtement dur (12) est stratifiée pour être en contact avec le support (11).

3. Film stratifié (10) selon la revendication 1 ou la revendication 2, dans lequel la couche de revêtement dur (12) présente une épaisseur de 50-150 nm.

4. Film stratifié (10) selon l'une quelconque des revendications 1 - 3, qui contient un alcoxysilane comprenant un ou plusieurs groupes fonctionnels organiques autres qu'un groupe hydroxyle en tant qu'alcoxysilane.

5. Film stratifié (10) selon l'une quelconque des revendications 1 - 4, dans lequel un ratio de l'alcoxysilane ayant un ou plusieurs des groupes fonctionnels organiques autres que le groupe hydroxyle par rapport à l'intégralité de l'alcoxysilane contenu dans la couche de revêtement dur (12) est ≥ 30 % molaire.

6. Film stratifié (10) selon l'une quelconque des revendications 1 - 5, dans lequel la couche de revêtement dur (12) est exempte de particules inorganiques autres que l'hydrolysat de l'alcoxysilane.

7. Film stratifié (10) selon l'une quelconque des revendications 1 - 3, dans lequel la résine durcissable par UV est durcie par irradiation d'une composition contenant au moins l'un d'un monomère et d'un oligomère et un initiateur de photopolymérisation avec des rayons UV.

8. Film stratifié (10) selon la revendication 7, dans lequel le monomère ou l'oligomère comprend deux doubles liaisons polymérisables ou plus dans une molécule.

9. Film stratifié (10) selon l'une quelconque des revendications 1 - 8, dans lequel le composant principal de la couche fonctionnelle optique (22) est une résine ayant un module élastique < 20 MPa.

10. Film stratifié (10) selon l'une quelconque des revendications 1-8, dans lequel le composant principal de la couche fonctionnelle optique (22) est une résine ayant un module élastique ≥ 20 MPa.

11. Dispositif d'affichage comprenant le film stratifié (10) selon l'une quelconque des revendications 1 - 10.
